(19) Europäisches Patentamt
European Patent Office
Office européen des brevets

(11) EP 3 845 605 A1

(12) **EUROPEAN PATENT APPLICATION**
published in accordance with Art. 153(4) EPC

(43) Date of publication:
**07.07.2021 Bulletin 2021/27**

(21) Application number: **19853936.3**

(22) Date of filing: **29.08.2019**

(51) Int Cl.:
***C08L 101/02*** *(2006.01)* ***C08J 3/24*** *(2006.01)*
***C08K 3/36*** *(2006.01)* ***C08L 83/02*** *(2006.01)*

(86) International application number:
**PCT/JP2019/034024**

(87) International publication number:
**WO 2020/045599 (05.03.2020 Gazette 2020/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **29.08.2018 JP 2018160832**

(71) Applicant: **NITTO DENKO CORPORATION**
**Ibaraki-shi**
**Osaka 567-8680 (JP)**

(72) Inventors:
- **KIMURA, Naomichi**
**Ibaraki-shi, Osaka 567-8680 (JP)**
- **ITO, Yuri**
**Ibaraki-shi, Osaka 567-8680 (JP)**
- **IHARA, Terukazu**
**Ibaraki-shi, Osaka 567-8680 (JP)**
- **KAMIO, Eiji**
**Kobe-shi, Hyogo 657-8501 (JP)**
- **MATSUYAMA, Hideto**
**Kobe-shi, Hyogo 657-8501 (JP)**
- **KINOSHITA, Masayuki**
**Kobe-shi, Hyogo 657-8501 (JP)**
- **YASUI, Tomoki**
**Kobe-shi, Hyogo 657-8501 (JP)**

(74) Representative: **Hoffmann Eitle**
**Patent- und Rechtsanwälte PartmbB**
**Arabellastraße 30**
**81925 München (DE)**

(54) **METHOD FOR PRODUCING IONIC LIQUID-CONTAINING STRUCTURE AND IONIC LIQUID-CONTAINING STRUCTURE**

(57) The present invention relates to a method for producing an ionic liquid-containing structure, including: an inorganic network structure forming step of forming a network structure of an inorganic compound in the presence of an ionic liquid; and a polymer network structure forming step of forming a polymer network structure of a prepolymer and a crosslinking agent in the presence of the ionic liquid.

EP 3 845 605 A1

## Description

TECHNICAL FIELD

The present invention relates to a method for producing an ionic liquid-containing structure and an ionic liquid-containing structure.

BACKGROUND ART

Recently, a technology of applying an interpenetrating network structure to a gel that responds to two or more stimuli of oxidation-reduction, temperature, electricity, and the like has been proposed (Patent Literature 1).

A high-strength gel structure (IPN gel, double network (DN) gel) having the interpenetrating network structure includes a hydrogel using water as a solvent. As high-strength hydrogels having other structures, a slide ring gel, a tetra-PEG gel, a nanocomposite gel, and the like have been proposed. However, they have a problem that they cannot be stored for a long period of time since they use water, which is volatile, as a solvent and water volatilizes under an atmospheric environment.

On the other hand, for a gel structure that can be stored for a long period of time under an atmospheric environment, an ionic gel using, as a solvent, an ionic liquid having extremely low volatility has been developed, and a slide ring gel and a tetra-PEG gel using the ionic liquid have been also proposed. However, they have problems that the preparation method thereof is complicated, use of a special compound is necessary, and they are insufficient in versatility.

A technology of an adhesive composition has been proposed in which an acrylic polymer and a cross-linked polymer consisting of an acrylic monomer and a radically polymerizable oligomer interpenetrate to form a structure in which they are entangled in a network form and the interpenetrating network is appropriately swelled by an ionic liquid to improve adhesiveness and impact resistance (Patent Literature 2).

However, the adhesive composition has a low proportion of the ionic liquid, cannot fully utilize the performance of the ionic liquid and is insufficient in the formability and the self-supporting properties.

An ionic liquid has extremely low volatility, has fluidity even at room temperature, and has good thermal conductivity. However, under relatively high pressure conditions, the ionic liquid typically leaks out of a porous support to be used for immobilizing the ionic liquid, and is difficult to use under high pressure. Thus, for example, a gel-like structure having high strength (e.g., toughness) has been desired.

As described above, there is room for improvement in the ionic liquid-containing interpenetrating network structure having long-term storability, transparency, flexibility, self-supporting properties, formability, and toughness while the preparation of the ionic liquid-containing interpenetrating network structure is simple, and for improvement in a method for producing the same.

For such an ionic liquid-containing interpenetrating network structure having long-term storability, transparency, flexibility, self-supporting properties, formability, and toughness, and a method for producing the same, Patent Literature 3 proposes an ionic liquid-containing interpenetrating network structure containing a specific network structure formed by polycondensation, a specific network structure formed by radical polymerization, and a specific ionic liquid, and a method for producing the same. Further, it discloses that the ionic liquid-containing interpenetrating network structure can be applied as a $CO_2$ absorbing medium such as a $CO_2$ absorbent and a $CO_2$-selective permeable membrane that can be used even under high pressure.

CITATION LIST

PATENT LITERATURE

Patent Literature

Patent Literature 1: JP 2012-511612 A
Patent Literature 2: JP 2008-24818 A
Patent Literature 3: Japanese Patent No. 6103708

## SUMMARY OF INVENTION

### PROBLEM TO BE SOLVED

However, in the technology described in Patent Literature 3, a network structure is formed by radical polymerization of a monomer component including a monomer having a vinyl group and an amide group. The formation of a network structure by radical polymerization requires long time, and thus it has a problem in productivity. Further, an ionic liquid-containing structure having higher $CO_2$ separation performance has been demanded.

In view of the above problems, an object of the present invention is to provide a method capable of producing an ionic liquid-containing structure with high productivity. Another object thereof is to provide an ionic liquid-containing structure excellent in $CO_2$ separation performance and having flexibility and toughness.

### SOLUTION TO PROBLEM

As a result of intensive studies to solve the above-mentioned problems, the present inventors have found that the above problems can be solved by forming a polymer network structure through a prepolymer and a crosslinking agent, and have accomplished the present invention.

That is, one embodiment of the present invention relates to a method for producing an ionic liquid-containing structure, comprising:

an inorganic network structure forming step of forming a network structure of an inorganic compound in the presence of an ionic liquid; and
a polymer network structure forming step of forming a polymer network structure of a prepolymer and a crosslinking agent in the presence of the ionic liquid.

In one embodiment of the method for producing of the present invention, the inorganic compound may include inorganic particles.

In one embodiment of the method for producing of the present invention, the inorganic particles may include inorganic oxide particles.

In one embodiment of the method for producing of the present invention, the inorganic particles may include silica particles.

In one embodiment of the method for producing of the present invention, the inorganic particles may have a specific surface area of 20 to 300 $m^2/g$

In one embodiment of the method for producing of the present invention, the inorganic compound may include a silicon-containing compound.

In one embodiment of the method for producing of the present invention, the silicon-containing compound may include a silicate.

In one embodiment of the method for producing of the present invention, a polar group-containing monomer may be included as a monomer unit.

In one embodiment of the method for producing of the present invention, a polar group of the polar group-containing monomer may be an atomic group containing an N atom or an O atom.

In one embodiment of the method for producing of the present invention, an amount of the ionic liquid to be used may be 5% to 95% by mass based on 100% by mass of components constituting the ionic liquid-containing structure.

One embodiment of the method for producing of the present invention may further include a mixing step of mixing the ionic liquid, the inorganic compound, the prepolymer, and the crosslinking agent before the inorganic network structure forming step and the polymer network structure forming step.

One embodiment of the method for producing of the present invention relates to an ionic liquid-containing structure comprising:

an ionic liquid;
an inorganic network structure; and
a polymer network structure, wherein
the polymer network structure is composed of a plurality of polymer chains bonded by a cross-linking chain,
the polymer chain has a structure in which monomer structural units are polymerized, and
the polymer chain and the cross-linking chain are bonded in a different manner from a bond in which the monomer structural units are polymerized

The polymer chain may have a structure in which the monomer structural units are radically polymerized.

The polymer chain and the cross-linking chain may be bonded to each other by at least one bond selected from the group consisting of a hydrazone bond, an amide bond, an imide bond, a urethane bond, an ether bond, and an ester bond.

ADVANTAGEOUS EFFECTS OF INVENTION

The method for producing an ionic liquid-containing structure of an embodiment of the present invention allows for forming a polymer network structure in a short period of time since a three-dimensionally cross-linked polymer network structure is formed with a prepolymer obtained by polymerizing a monomer and a crosslinking agent. Thus, this allows the ionic liquid-containing structure to be produced with high productivity. Moreover, the method is applicable to, for example, continuous thin film formation by a roll-to-roll method since the drying time during film formation can be performed in a short period of time. In addition, the ionic liquid-containing structure is excellent in $CO_2$ separation performance and has flexibility and toughness.

BRIEF DESCRIPTION OF DRAWINGS

[FIG. 1] FIG. 1 is a diagram showing results of measuring compressive strength of an ionic liquid-containing structure according to an embodiment of the present invention.
[FIG. 2] FIG. 2 is a diagram showing fracture stress of the ionic liquid-containing structure according to the embodiment of the present invention.
[FIG. 3] FIG. 3 is a diagram showing fracture strain of the ionic liquid-containing structure according to the embodiment of the present invention.
[FIG. 4] FIG. 4 is a diagram showing a Young's modulus of the ionic liquid-containing structure according to the embodiment of the present invention.
[FIG. 5] FIG. 5 is a diagram showing results of measuring compressive strength of an ionic liquid-containing structure according to an embodiment of the present invention.
[FIG. 6] FIG. 6 is a diagram showing fracture stress of the ionic liquid-containing structure according to the embodiment of the present invention.
[FIG. 7] FIG. 7 is a diagram showing fracture strain of the ionic liquid-containing structure according to the embodiment of the present invention.
[FIG. 8] FIG. 8 is a diagram showing a Young's modulus of the ionic liquid-containing structure according to the embodiment of the present invention.
[FIG. 9] FIG. 9 is a diagram showing toughness of the ionic liquid-containing structure according to the embodiment of the present invention.

DESCRIPTION OF EMBODIMENTS

Hereinafter, an embodiment of the present invention will be described in detail.

<Method for Producing Ionic Liquid-containing Structure>

A method for producing an ionic liquid-containing structure according to one embodiment of the present invention (hereinafter, also referred to as the production method of the present embodiment) includes: an inorganic network structure forming step of forming a network structure of an inorganic compound in the presence of an ionic liquid; and a polymer network structure forming step of forming a polymer network structure of a prepolymer and a crosslinking agent in the presence of the ionic liquid.

According to the production method of the present embodiment, a dispersion liquid of an inorganic compound for forming an inorganic network structure, a prepolymer for forming a three-dimensional network structure, and a crosslinking agent are mixed, and the formation of the inorganic network structure and the formation of the highly three-dimensionally cross-linked polymer network structure are allowed to proceed respectively in the presence of an ionic liquid, so that the ionic liquid-containing structure can be easily produced with high productivity.

(Ionic Liquid)

The ionic liquid to be used in the production method of the present embodiment has thermal stability and low vapor pressure and can be stored stably without volatilizing even under an atmospheric environment, and conventionally

known ones can be used. The ionic liquid functions as a dispersion solvent for the inorganic compound for forming the inorganic network structure and functions as a solvent for the prepolymer and the crosslinking agent for forming the polymer network structure. After the inorganic network structure and the polymer network structure are formed, the ionic liquid is also included within these network structures.

In the present embodiment, the SP value of the ionic liquid is not limited, and, from the viewpoint of separability, it is preferably 20 $(J/cm^3)^{1/2}$ or more and more preferably 50 $(J/cm^3)^{1/2}$ or more. Further, from the viewpoint of polymer compatibility, it is preferably 90 $(J/cm^3)^{1/2}$ or less and more preferably 70 $(J/cm^3)^{1/2}$ or less.

The SP value of the ionic liquid is defined according to the following method.

First, molecular dynamics calculation is performed on a liquid system molecular model under three-dimensional periodic boundary condition in which cation molecules and anion molecules constituting an ionic liquid are mixed in equimolar amounts, under NPT ensemble conditions of 1 atm and 298 K, to create an energetically stable cohesion model. Then, for the created cohesion model, the cohesive energy density is calculated by subtracting the total energy per unit area from the intramolecular energy value per unit area. The SP value is defined as the square root of this cohesive energy density. Here, COMPASS may be used for the force field of the molecular dynamics calculation, and for all the molecular models, those obtained by executing the structure optimization by the density functional method using B3LYP/6-31G(d) as a basis function may be employed. The point charge of each element in the molecular model may be determined by an electrostatic potential fitting method.

The molar volume of the ionic liquid is also not limited, and is preferably 50 $cm^3$/mol or more, and more preferably 100 $cm^3$/mol or more from the viewpoint of separation characteristics. Also, it is preferably 800 $cm^3$/mol or less, and more preferably 300 $cm^3$/mol or less.

The molar volume of the ionic liquid is defined according to the following method.

First, molecular dynamics calculation is performed on a liquid system molecular model under a three-dimensional periodic boundary condition in which cation molecules and anion molecules constituting an ionic liquid are mixed in equimolar amounts, under NPT ensemble conditions of 1 atm and 298 K, to create an energetically stable cohesion model. Then, for the created cohesion model, the molecular weight and the density are calculated. The molar volume is defined as molecular weight/density. Here, COMPASS may be used for the force field of the molecular dynamics calculation, and for all the molecular models, those obtained by executing the structure optimization by the density functional method using B3LYP/6-31G(d) as a basis function may be employed. The point charge of each element in the molecular model may be determined by an electrostatic potential fitting method.

In the present embodiment, for a specific ionic liquid, a suitable ionic liquid can be appropriately selected according to the use to which the ionic liquid-containing structure is applied.

For example, when a use such as a $CO_2$-selective permeable membrane is assumed, examples of the ionic liquid include an ionic liquid having imidazolium, pyridinium, ammonium or phosphonium and a substituent having 1 or more carbon atoms, and a Gemini-type ionic liquid.

For the ionic liquid having imidazolium and a substituent having 1 or more carbon atoms, examples of the substituent having 1 or more carbon atoms include an alkyl group having 1 or more and 20 or less carbon atoms, a cycloalkyl group having 3 or more and 8 or less carbon atoms, and an aryl group having 6 or more and 20 or less carbon atoms. The above groups may be further substituted with a hydroxy group, a cyano group, an amino group, an ether group, or the like (e.g., a hydroxyalkyl group having 1 or more and 20 or less carbon atoms). Examples of the ether group include a polyalkylene glycol group such as polyethylene glycol.

Examples of the alkyl group having 1 or more and 20 or less carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, a 1,5-dimethylhexyl group, a cyclopropyl group, a cyclopropylmethyl group, a cyclobutyl group, a cyclobutylmethyl group, a cyclopentyl group, a cyclohexyl group, a cyclohexylmethyl group, a cycloheptyl group, a cyclooctyl group, a cyclohexyl group, a cyclohexylpropyl group, a cyclododecyl group, a norbornyl group, a bornyl group, and an adamantyl group.

Examples of the cycloalkyl group having 3 or more and 8 or less carbon atoms include a cyclopropyl group, a cyclobutyl group, a cyclopentyl group, a cyclohexyl group, a cycloheptyl group, and a cyclooctyl group.

Examples of the aryl group having 6 or more and 20 or less carbon atoms include a phenyl group, a toluyl group, a xylyl group, a mesityl group, an anisyl group, a naphthyl group, and a benzyl group.

The compound having imidazolium and a substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethyl-sulfonyl)imide, thiocyanate, dicyanamide, tricyanomethanide, tetracyanoborate, hexafluorophosphate, tetrafluoroborate, and halide.

Specific examples of the ionic liquid having imidazolium and a substituent having 1 or more carbon atoms include 1-ethyl-3-methylimidazolium bis(fluorosulfonyl)imide, 1-butyl-3-methylimidazolium bis(trifluoromethylsulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-2,3-dimethylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimymidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-ethyl-3-methylimidazolium tricyanomethanide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, and 1-methyl-3-[6-(methylsulfinyl)hexyl]imidazolium p-toluenesulfonate.

Among them, from the viewpoint of gas separation performance, more preferred are 1-butyl-3-methylimidazolium bis(trifluoromethylsulfonyl)imide ([Bmim] [$Tf_2N$]), 1-ethyl-3-methylimidazolium bis(fluorosulfonyl) imide ([Emim] [FSI]), 1-ethyl-3-methylimidazolium dicyanamide ([Emim] [DCA]), and 1-ethyl-3-methylimidazolium tricyanomethanide ([Emim] [TCM]), and still more preferred is 1-ethyl-3-methylimidazolium dicyanamide ([Emim] [DCA]).

A Gemini-type ionic liquid is a compound having a structure in which a plurality of molecules constituting the ionic liquid are bonded via a bonding site.

Examples of the ionic liquid include those described above, and preferred ones are also the same.

As the binding site, for example, an alkylene group having 1 or more and 20 or less carbon atoms or a divalent ether group can be used. Examples thereof include a methylene group, an ethylene group, an n-propylene group, an n-butylene group, an n-pentylene group , an n-hexylene group, an n-heptylene group, an n-octylene group, an n-nonylene group, an n-decylene group, an n-undecylene group, an n-dodecylene group, an n-tridecylene group, an n-tetradecylene group, an n-pentadecylene group , an n-hexadecylene group, an n-heptadecylene group, an n-octadecylene group, an n-nonadecylene group, an n-eicosadecylene group, and the like, and divalent linking groups obtained by combining them with an ether bond (-O-). The bonding site is preferably an alkylene group having 1 or more and 20 or less carbon atoms.

As the Gemini-type ionic liquid, a compound represented by the following general formula can be preferably exemplified.

[Chem 1]

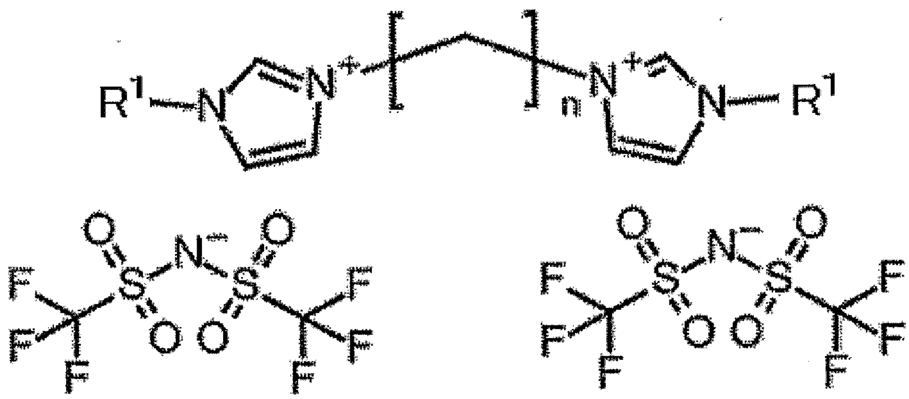

In the above general formula, $R^1$ represents an alkyl group having 1 or more and 20 or less carbon atoms, a cycloalkyl group having 3 or more and 8 or less carbon atoms, or an aryl group having 6 or more and 20 or less carbon atoms, these groups may be further substituted with a hydroxy group, a cyano group, an amino group, or a monovalent ether group and n represents an integer of 1 to 20.

In the above general formula, the examples of the alkyl group having 1 or more and 20 or less carbon atoms, the cycloalkyl group having 3 or more and 8 or less carbon atoms, or an aryl group having 6 or more and 20 or less carbon atoms represented by $R^1$ include those described above and preferred ones are also the same.

Among them, from the viewpoint of strength, as the Gemini-type ionic liquid, $[C_9(mim)_2]$ $[TF_2N]$ and $[C_9(C_2OHim)_2]$ $[TF_2N]$ are particularly preferred.

As for these Gemini-type ionic liquids, a $Tf_2N$ salt can be synthesized, from a Br salt synthesized by an $SN_2$ reaction, by a metathesis method (Reference Literature: Chem. Mater. 2007, 19, 5848-5850).

The ionic liquid having phosphonium and a substituent having 1 or more carbon atoms exhibit properties equivalent to those of the ionic liquid having imidazolium and a substituent having 1 or more carbon atoms.

The substituent having 1 or more carbon atoms may be the same as those exemplified above.

The ionic liquid having phosphonium and a substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethyl-sulfonyl)imide, thiocyanate, dicyanamide, tricyanomethanide, tetracyanoborate hexafluorophosphate, tetrafluoroborate, halide, derivatives of amino acids, and derivatives of nitrogen-containing heterocyclic compounds.

Among them, the counter anion is preferably a derivative of an amino acid or a derivative of a nitrogen-containing heterocyclic compound, and more preferably methylglycine, dimethylglycine, trimethylglycine, indazole, or imidazole.

Examples of the ionic liquid having phosphonium and a substituent having 1 or more carbon atoms include tetrabutylphosphonium methylglycine, tetrabutylphosphonium dimethylglycine, and tetrabutylphosphonium trimethylglycine.

In the production method of the present embodiment, from the viewpoint of the gas separation performance of the ionic liquid-containing structure to be obtained, the amount of the ionic liquid to be used is preferably 5% to 95% by mass, and more preferably 30% to 90% by mass based on 100% by mass of the components constituting the ionic liquid-containing structure. When the content is less than 5% by mass, the separation performance may be remarkably deteriorated. When the content exceeds 95% by mass, the self-supporting properties of the formed product may not be achieved.

Moreover, the amount of the ionic liquid to be used is preferably 10 to 10,000 parts by mass, and is more preferably 100 to 4,700 parts by mass relative to 100 parts by mass of the components constituting the polymer network structure.

[Inorganic Network Structure Forming Step]

In the inorganic network structure forming step in the production method of the present embodiment, an inorganic network structure is formed by forming a network of an inorganic compound in the presence of an ionic liquid.

The inorganic compound may be any compound capable of forming a network, and is not limited. Examples thereof include inorganic particles and inorganic monomers.

The mass ratio (prepolymer/inorganic compound) of the prepolymer for forming the polymer network structure to the inorganic compound for forming the inorganic network structure is preferably 1/10 to 10/1, and more preferably 1/4 to 4/1.

(Inorganic Particles)

The network formation of the inorganic particles proceeds in a short period of time owing to the cohesion of the inorganic particles, and thus the production method of the present embodiment allows the ionic liquid-containing structure to be produced with high productivity.

The inorganic particles to be used are not limited as long as they can form a network by cohesive force, and examples thereof include particles of inorganic oxides such as silica, titania, zirconia, alumina, copper oxide, layered silicate, and zeolite. Among them, silica particles are preferred from the viewpoint of cohesive force. The silica particles are preferably fumed silica (e.g., Aerosil 200), colloidal silica, and the like. One kind or a combination of two or more kinds of the inorganic particles can be used. Moreover, the inorganic particles may have been subjected to various surface treatments such as a dimethylsilyl treatment and a trimethylsilyl treatment.

The specific surface area of the inorganic particles is preferably 20 $m^2/g$ or more, and more preferably 50 $m^2/g$ or more, from the viewpoint of the reinforcing effect. In addition, from the viewpoint of coatability of the dispersion liquid, the specific surface area of the inorganic particles is preferably 300 $m^2/g$ or less, and more preferably 200 $m^2/g$ or less.

Here, the specific surface area of the inorganic particles is measured by the BET method.

The primary particle diameter of the inorganic particles is preferably 1 nm or more, and more preferably 5 nm or more, from the viewpoint of the reinforcing effect. In addition, from the viewpoint of dispersion stability, the primary particle diameter of the inorganic particles is preferably 100 nm or less, and more preferably 50 nm or less.

Here, the primary particle diameter of the inorganic particles is measured by observation with transmission electron microscopic.

In the inorganic network structure forming step, the temperature at the time of forming the network of the

inorganic particles is, for example, preferably 5°C to 50°C, and more preferably 15°C to 30°C.

The time required for forming the network of the inorganic particles is, for example, preferably shorter than 5 minutes, and more preferably shorter than 1 minute.

Moreover, at the time of forming the network of the inorganic particles, an alcohol such as ethanol, propanol, and butanol, water, or the like may be further used as a dispersion medium in addition to the ionic liquid.

(Inorganic Monomer)

The inorganic monomer is not limited as long as it can form a network of inorganic polymers by polymerization. Examples of the polymerizable inorganic monomer include mineral acid salts, organic acid salts, alkoxides, and complexes (chelates) of metals such as Si, Ti, Zr, Al, Sn, Fe, Co, Ni, Cu, Zn, Pb, Ag, In, Sb, Pt, and Au. Among them, a silicon-containing compound is preferred. They are treated as inorganic monomers in the present invention, since they are finally polymerized through inorganic substances (metal oxides, hydroxides, carbides, metals, or the like) by hydrolysis, thermal decomposition, or the like. These inorganic monomers can also be used in a partial hydrolyzate state thereof.

(Silicon-containing Compound)

Network formation by the silicon-containing compound proceeds in a short period of time by dehydration polycondensation, and this allows an ionic liquid-containing structure to be produced with high productivity. The bond between the silicon-containing compounds is, for example, a hydrogen bond or an intermolecular force bond.

The silicon-containing compound may be in a gas, liquid, or solid state under normal temperature and pressure as long as the compound is a silicon-containing compound.

The silicon-containing compound to be used may be any compound capable of forming a network by polycondensation. It is not limited, and may be silicon oxide or silicate.

Examples of the silicon-containing compound include a compound represented by the following formula (1).

[Chem. 2]

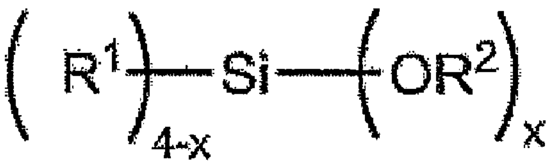

· · · (1)

In the formula (1), X is 1 to 4,
$R^1$ and $R^2$ are a linear or branched alkyl group individually,
$R^1$ and $R^2$ may be the same or different from each other,
when X is 2, $R^1$s may be the same or different from each other, and
$R^2$s may be the same or different from each other.

Examples of the branched alkyl group represented by $R^1$ and $R^2$ include a linear or branched alkyl group having 1 to 6 carbon atoms, preferably 1 to 4 carbon atoms, and more preferably 1 to 2 carbon atoms. Examples of the linear alkyl group include a methyl group, an ethyl group, a propyl group, a butyl group, a pentyl group, and a hexyl group. Examples of the branched alkyl group include an isopropyl group and an isobutyl group.

Specific examples of the compound represented by the formula (1) include tetramethoxy orthosilicate, tetraethoxy orthosilicate (tetraethyl orthosilicate), methyltriethoxy orthosilicate, methyltrimethoxy orthosilicate, octyltriethoxy orthosilicate, and dimethyldiethoxy orthosilicate. One kind or a mixture of two or more kinds thereof can be used. Among them, tetraethoxy orthosilicate (TEOS) is preferred from the viewpoint of performing polycondensation and three-dimensionally crosslinking to exhibit a high crosslinking density.

Hereinafter, the inorganic network structure forming step will be described by taking, as an example, a case where the inorganic compound is a silicon-containing compound.

In the inorganic network structure forming step, for example, a catalyst for chemically bonding silicon-containing compounds to each other may be used. The content of the catalyst is not limited, but is preferably 0.01% to 20% by mass, more preferably 0.05% to 10% by mass, and still more preferably 0.1% to 5% by mass relative to the mass of the silicon-containing compound.

In addition, in the inorganic network structure forming step, for example, a crosslinking aid for indirectly bonding

silicon-containing compounds to each other may be used. The content of the crosslinking aid is not limited, but is, for example, preferably 0.01% to 20% by mass, more preferably 0.05% to 15% by mass, and still more preferably 0.1% to 10% by mass relative to the mass of the silicon-containing compound.

The inorganic network structure forming step is, for example, a step of gelling a monomer of the silicon-containing compound by forming a network of silicon-containing compounds by a dehydration condensation reaction in the presence of a dehydration condensation catalyst.

In the inorganic network structure forming step, the temperature at the time of forming the network of the silicon-containing compound is, for example, preferably 5°C to 100°C, and more preferably 15°C to 60°C.

The time required for forming the network of the silicon-containing compound is, for example, preferably shorter than 5 minutes, and more preferably shorter than 1 minute.

Moreover, at the time of forming the network of the silicon-containing compound, an alcohol such as ethanol, propanol, and butanol, water, or the like may be further used as a dispersion medium in addition to the ionic liquid.

[Polymer Network Structure Forming Step]

In the polymer network structure forming step in the production method of the present embodiment, a polymer network structure is formed by reacting a prepolymer with a crosslinking agent in the presence of an ionic liquid.

In the polymer network structure forming step, using a prepolymer obtained by polymerizing a monomer allows the polymer network structure to be formed to be highly three-dimensionally cross-linked, and this allows an ionic liquid-containing structure to have excellent toughness. Since it can be diluted with a solvent and coated/gelled, a thin film can be formed to provide an ionic liquid-containing structure having excellent $CO_2$ separation performance.

The weight average molecular weight (Mw) of the polymer network structure is, for example, preferably 5,000 or more, more preferably 10,000 or more, still more preferably 20,000 or more, and even more preferably 40,000 or more. The upper limit is not limited, but for example, is preferably 5 million or less, more preferably 2 million or less, and still more preferably 1.5 million or less.

40,000 or more of the weight average molecular weight (Mw) of the polymer network structure allows a gel to have excellent mechanical strength.

The weight average molecular weight of the polymer network structure can be calculated by, for example, measuring the molecular weight distribution of the polymer network structure by a gel permeation chromatograph (GPC) equipped with a differential refractive index detector (RID), and using standard polystyrene as a calibration curve based on the obtained chromatogram (chart).

(Prepolymer)

The prepolymer used for forming the polymer network structure is a reactive precursor of the polymer network structure, and may be a prepolymer obtained by allowing the monomer to react to the extent that the monomer does not gel.

The prepolymer is preferably a polymer having a crosslinking point capable of reacting with a crosslinking agent. The prepolymer may have the crosslinking point at any of the terminal, main chain, and side chain of the prepolymer, and preferably has the crosslinking point in the side chain for highly three-dimensional crosslinking. The prepolymer may be a homopolymer, a copolymer, or a mixture thereof, or the prepolymer may be used in combination with a monomer.

The prepolymer preferably has a polymer chain in which the monomer structural units are polymerized, and the polymer chain preferably has a structure in which the monomer structural units are radically polymerized. A plurality of polymer chains are bonded by cross-linking chains to form a polymer network structure.

The polymer chain and the cross-linking chain are preferably bonded to each other by at least one bond selected from the group consisting of a hydrazone bond, an amide bond, an imide bond, a urethane bond, an ether bond, and an ester bond.

The crosslinking point in the prepolymer includes a polar group. The prepolymer preferably has a polar group, more preferably has a polar group on the side chain. The prepolymer more preferably has a group that can be bonded to the cross-linking chain by at least one bond selected from the group consisting of a hydrazone bond, an amide bond, an imide bond, a urethane bond, an ether bond, and an ester bond. The prepolymer having a polar group allows an ionic liquid-containing structure to be easily highly three-dimensionally cross-linked. The ionic liquid-containing structure having a polar group allows for stably retaining the ionic liquid even at a high content.

The polar group means an atomic group containing atoms other than carbon and hydrogen, and examples thereof typically include an atomic group containing an N atom or an O atom.

Examples of such a polar group include atomic groups containing an amino group (including an amino group substituted with an alkyl group or the like), an amide group, an acrylamide group, an acetamide group, a morpholino group, a pyrrolidone skeleton, a carboxyl group, an ester group, a hydroxy group, or an ether group.

Examples of the atomic group containing an amide group include atomic groups having an amide group, an

acrylamide group, an acetamide group, and a pyrrolidone skeleton. As the monomer having an acrylamide group, since one having lower bulkiness can grow for a longer period, methylacrylamide or dimethylacrylamide is preferred.

Examples of the atomic group containing an ether group include polyether chains like a polyalkyl ether chain such as a polyethylene glycol chain or a polypropylene glycol chain.

The prepolymer can preferably be obtained by polymerizing a monomer having a crosslinking point in the presence of a polymerization initiator.

The polymerization of the monomer component at the time of synthesizing the prepolymer is preferably radical polymerization from the viewpoint of promoting the flexibility and stretchability of the ionic liquid-containing structure. The synthesis of the prepolymer by radical polymerization is preferably performed such that the monomer component is polymerized in a chain reaction with a radical being centered and the polymer network structure to be formed by the prepolymer has a crosslinking density lower than that of the inorganic network structure. The monomer component to be used in the radical polymerization is suitably one mainly polymerized as two-dimensional crosslinking, in order to have a low crosslinking density.

When the synthesis of the prepolymer is performed by radical polymerization, either thermal polymerization or photopolymerization (ultraviolet irradiation) is preferably employed.

The monomer for forming the prepolymer is, for example, preferably a monomer having the above polar groups; more preferably has a group that can be bonded to the cross-linking chain by at least one bond selected from the group consisting of a hydrazone bond, an amide bond, an imide bond, a urethane bond, an ether bond, and an ester bond; still more preferably at least one selected from an amide group-containing monomer, an imide group-containing monomer, an amino group-containing monomer, an epoxy group-containing monomer, and a vinyloxy group-containing monomer; and even more preferably at least one selected from an amide group-containing monomer, an imide group-containing monomer, and a vinyloxy group-containing monomer.

Examples of the amide group-containing monomer include acrylamide, methacrylamide, diethylacrylamide, N-vinylpyrrolidone, N,N-dimarylacrylamide, N,N-dimethylmethacrylamide, N,N-diethylacrylamide, N,N-diethylmethacrylamide, N,N'-methylenebisacrylamide, N,N-dimethylaminopropyl acrylamide, N,N-dimethylaminopropyl methacrylamide, and diacetoneacrylamide.

Examples of the imide group-containing monomer include N-(meth)acryloyl oxysuccinimide, N-(meth)acryloyl oxymethylene succinimide, and N-(meth)acryloyloxyethylene succinimide.

Examples of the amino group-containing monomer include aminoethyl (meth)acrylate, N,N-dimethylaminoethyl (meth)acrylate, and N,N-dimethylaminopropyl (meth)acrylate.

Examples of the epoxy group-containing monomer include glycidyl (meth)acrylate, methylglycidyl (meth)acrylate, 3-ethyloxetane-3-yl (meth)acrylate, and allyl glycidyl ether.

Examples of the vinyloxy group-containing monomer include vinyloxy group-containing monomers such as 2-(2-vinyloxyethoxy)ethyl (meth)acrylate, 2-vinyloxyethyl (meth)acrylate, and 4-vinyloxypropyl (meth)acrylate.

These monomers may be used alone or in combination of two or more thereof.

For example, when methyl acrylamide or dimethyl acrylamide is used as one of the monomers forming the prepolymer, N,N'-methylenebisacrylamide, diacetoneacrylamide (DAAm), N-acryloyloxysuccinimide (NSA) and the like can be copolymerized as a monomer having a crosslinking point.

Further, in addition to being used for the prepolymer, these monomers may be further used in the polymer network structure forming step.

As the radical polymerization initiator, a water-soluble thermal catalyst such as potassium persulfate or the like can be used when methyl acrylamide or dimethyl acrylamide is, as a monomer, subjected to thermal polymerization. In the case of photopolymerization, 2-oxoglutaric acid can be used as a photosensitizer.

As the other polymerization initiators, an azo-based polymerization initiator, a peroxide-based initiator, a redox-based initiator composed of a combination of a peroxide and a reducing agent, a substituted ethane-based initiator, and the like can be used. Various photopolymerization initiators can be used for photopolymerization.

Examples of the azo-based polymerization initiator include 2,2'-azobisisobutyronitrile (AIBN), 2,2'-azobis-2-methylbutyronitrile, dimethyl-2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride.

Examples of the peroxide-based initiator include persulfate salts such as potassium persulfate and ammonium persulfate; dibenzoyl peroxide, t-butyl permaleate, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxy)cyclododecane, and hydrogen peroxide.

Examples of the redox-based initiator include a combination of a peroxide and ascorbic acid (a combination of aqueous hydrogen peroxide and ascorbic acid, or the like) and a combination of a peroxide and an iron (II) salt (a combination of aqueous hydrogen peroxide and an iron (II) salt, or the like), and a combination of a persulfate salt and sodium hydrogen sulfite.

Examples of the substituted ethane-based initiator include phenyl-substituted ethane.

As the photopolymerization initiator, preferred are (1) acetophenone-based, (2) ketal-based, (3) benzophenone-based, (4) benzoin-based, benzoyl-based, (5) xanthone-based, (6) active halogen compound [(6-1) triazine-based, (6-2) halomethyloxadiazole-based, (6-3) coumarin-based], (7) acridine-based, (8) biimidazole-based, and (9) oxime ester-based photopolymerization initiators.

(1) Examples of the acetophenone-based photopolymerization initiator suitably include 2,2-diethoxyacetophenone, p-dimethylaminoacetophenone, 2-hydroxy-2-methyl-1-phenyl-propan-1-one, p-dimethylaminoacetophenone, 4'-isopropyl-2-hydroxy-2-methyl-propiophenone, 1-hydroxy-cyclohexyl-phenyl-ketone, and 2-benzyl-2-dimethylamino-1-(4-morpholinophenyl)-butanone-1,2-tolyl-2-dimethylamino-1-(4-morpholinophenyl)-butanone-1,2-methyl-1-[4-(methylthio)phenyl]-2-morpholinopropanone-1.

(2) Examples of the ketal-based photopolymerization initiator suitably include benzyl dimethyl ketal, and benzyl-β-methoxyethyl acetal.

(3) Examples of the benzophenone-based photopolymerization initiator suitably include benzophenone, 4,4'-(bisdimethylamino)benzophenone, 4,4'-(bisdiethylamino)benzophenone, 4,4'-dichlorobenzophenone, and 2-benzyl-2-dimethylamino-1-(4-morpholinophenyl)-butanone-1,2-tolyl-2-dimethylamino-1-(4-morpholinophenyl)-butanone-1,2-methyl-1-[4-(methylthio)phenyl]-2-morpholinopropanone-1.

(4) Examples of the benzoin-based or benzoyl-based photopolymerization initiator suitably include benzoin isopropyl ether, benzoin isobutyl ether, benzoin methyl ether, and methyl o-benzoyl benzoate.

(5) Examples of the xanthone-based photopolymerization initiator suitably include diethylthioxanthone, diisopropylthioxanthone, monoisopropylthioxanthone, and chlorothioxanthone.

(6-1) Examples of the triazine-based photopolymerization initiator, which is an active halogen compound (6), suitably include 2,4-bis(trichloromethyl)-6-p-methoxyphenyl-s-triazine, 2,4-bis(trichloromethyl)-6-p-methoxystyryl-s-triazine, 2,4-bis(trichloromethyl)-6-(1-p-dimethylaminophenyl)-1,3-butadienyl-s-triazine, 2,4-bis(trichloromethyl)-6-biphenyl-s-triazine, 2,4-bis(trichloromethyl)-6-(p-methylbiphenyl)-s-triazine, p-hydroxyethoxystyryl-2,6-di(trichloromethyl)-s-triazine, methoxystyryl-2,6-di(trichloromethyl-s-triazine, 3,4-dimethoxystyryl-2,6-di(trichloromethyl)-s-triazine, 4-benzoxolan-2,6-di(trichloromethyl)-s-triazine, 4-(o-bromo-p-N,N-(diethoxycarbonylamino))-phenyl)-2,6-di(chloromethyl)-s-triazine, and 4-(p-N,N-(diethoxycarbonylamino)phenyl)-2,6-di(chloromethyl)-s-triazine.

(6-2) Examples of the halomethyloxadiazole-based photopolymerization initiator suitably include 2-trichloromethyl-5-styryl-1,3,4-oxodiazole, 2-trichloromethyl-5-(cyanostyryl)-1,3,4-oxodiazole, 2-trichloromethyl-5-(naphth-1-yl)-1,3,4-oxodiazole, and 2-trichloromethyl-5-(4-styryl)styryl-1,3,4-oxodiazole.

(6-3) Examples of the coumarin-based photopolymerization initiator suitably include 3 -methyl -5 -amino-((s-triazin-2-yl)amino)-3 -phenyl coumarin, 3-chloro-5-diethylamino-((s-triazin-2-yl)amino)-3-phenylcoumarin, and 3-butyl-5-dimethylamino-((s-triazin-2-yl)amino)-3-phenylcoumarin.

(7) Examples of the acridine-based photopolymerization initiator suitably include 9-phenylacridine and 1,7-bis(9-acridinyl)heptane.

(8) Examples of the biimidazole-based photopolymerization initiator suitably include 2-(o-chlorophenyl)-4,5-diphenylimidazolyl dimer, 2-(o-methoxyphenyl)-4,5-diphenylimidazolyl dimer, and 2-(2,4-dimethoxyphenyl)-4,5-diphenylimidazolyl dimer which are known as lophin dimers, 2-mercaptobenzimidazole, and 2,2'-benzothiazolyl disulfide.

(9) Examples of the oxime ester-based photopolymerization initiator suitably include 1,2-octanedione, 1-[4-(phenylthio)-2-(O-benzoyloxime)], ethanone, and 1-[9-ethyl-6-(2-methylbenzoyl)-9H-carbazol-3-yl]-1-(O-acetyloxime).

These polymerization initiators can be used alone or in combination of two or more. Among these polymerization initiators, 2,2-azobis-iso-butyronitrile is preferred. The blending ratio of the polymerization initiator is appropriately selected, but is preferably 0.1 part by mass or more, more preferably 0.3 part by mass or more, relative to 100 parts by mass of the monomer. Further, it is preferably 3 parts by mass or less, and more preferably 2 parts by mass or less.

If necessary, a solvent may be used for the synthesis of the prepolymer.

Preferred examples of the solvent include an organic solvent, for example, ketone-based organic solvents such as acetone, methyl ethyl ketone, and methyl isobutyl ketone; ester-based organic solvents such as methyl acetate, ethyl acetate, and butyl acetate; polar solvents such as dimethylformamide, dimethyl sulfoxide, and N-methyl-2-pyrrolidone; alcohol-based organic solvents such as methyl alcohol, ethyl alcohol, and isopropyl alcohol; aromatic hydrocarbon-based organic solvents such as toluene and xylene; aliphatic/alicyclic hydrocarbon-based organic solvents such as n-hexane, cyclohexane, and methylcyclohexane; cellosolve-based organic solvents such as methyl cellosolve, ethyl cellosolve, and butyl cellosolve; ether-based organic solvents such as tetrahydrofuran and dioxane; and carbitol-based organic solvents such as n-butyl carbitol and iso-amyl carbitol. These organic solvents can be used alone or in combination of two or more.

From the viewpoint of the mechanical strength of the gel, the weight average molecular weight (Mw) of the prepolymer is preferably 2,500 or more, more preferably 5,000 or more, and still more preferably 10,000 or more. The

upper limit is not limited, but is preferably 2.5 million or less, more preferably 1 million or less, and still more preferably 0.75 million or less.

The weight average molecular weight of the prepolymer can be calculated by, for example, measuring the molecular weight distribution of the prepolymer by a gel permeation chromatograph (GPC) equipped with a differential refractive index detector (RID), and using standard polystyrene as a calibration curve based on the obtained chromatograph (chart).

The method for synthesizing the prepolymer is not limited. The prepolymer can be polymerized by known methods such as solution polymerization, emulsion polymerization, bulk polymerization, suspension polymerization, atom transfer radical polymerization (ATRP), and Raft polymerization (reversible addition fragmentation chain transfer), but solution polymerization is preferred from the viewpoint of workability. The obtained prepolymer may be any of a random copolymer, a block copolymer, an alternating copolymer, a graft copolymer and the like.

Examples of an ATRP initiator include alkyl halides such as
tert-butyl 2-bromoisobutyrate (tert-butyl α-bromoisobutyrate),
methyl 2-bromoisobutyrate (methyl α-bromoisobutyrate),
2-bromoisobutyryl bromide (a-bromisobutyryl bromide),
ethyl 2-bromoisobutyrate (ethyl α-bromoisobutyrate),
2-hydroxyethyl 2-bromoisobutyrate,
ethylene bis(2-bromoisobutyrate),
1-tris(hydroxymethyl)ethane (1,1,1-tris(2-bromoisobutylyloxymethyl)ethane), and pentaerythritol tetrakis(2-bromoisobutyrate).

Examples of an ATRP catalyst ligand include
2,2'-bipyridyl,
4,4'-dimethyl-2,2'-dipyridyl,
4,4'-di-tert-butyl-2,2'-dipyridyl,
4,4'-dinonyl-2,2'-dipyridyl,
N-butyl-2-pyridylmethanimine,
N-octyl-2-pyridylmethanimine,
N-dodecyl-N-(2-pyridylmethylene)amine,
(N-octadecyl-N-(2-pyridylmethylene)amine, and
N,N,N",N",N"-pentamethyldiethylenetriamine.

Examples of an ATRP catalyst metal salt include
copper (I) chloride,
copper (II) chloride,
copper (I) bromide,
copper (II) bromide,
titanium (II) chloride,
titanium (III) chloride,
titanium (IV) chloride,
titanium (IV) bromide, and
iron (II) chloride.

Examples of an RAFT agent include
cyanomethyl dodecyl trithiocarbonate,
2-(dodecylthiocarbonothioylthio)-2-methyltropionic acid, and
2-cyano-2-propyl dodecyl trithiocarbonate.

The temperature of the radical polymerization in the synthesis of the prepolymer is, for example, preferably 25°C to 80°C, more preferably 30 to 70°C, and still more preferably 40°C to 60°C when thermal polymerization is employed, and is preferably 10°C to 60°C, more preferably 20°C to 50°C, and still more preferably 20°C to 40°C when photopolymerization is employed.

The reaction time of the radical polymerization in the synthesis of the prepolymer is, for example, preferably 1 to 100 hours, more preferably 20 to 80 hours, still more preferably 30 to 70 hours, and even more preferably 40 to 60 hours when the thermal polymerization is employed, and the reaction time is, for example, preferably 0.1 to 100 hours, more preferably 1 to 70 hours, still more preferably 5 to 40 hours, and even more preferably 10 to 30 hours when photopolymerization is employed.

At the time of photopolymerization, the wavelength of the ultraviolet light is not limited as long as the wavelength is an absorption wavelength at which the monomer(s) can be radically polymerized, and the wavelength can be preferably selected from a wavelength range of 200 to 550 nm, and the range is more preferably 250 to 500 nm, and still more preferably 300 to 400 nm. The intensity of the ultraviolet light is not limited but, when the intensity is too weak, the polymerization time will become long, and when the intensity is too strong, heat generation and safety becomes problems.

Thus, the intensity is preferably 1 to 3,000 mJ/($cm^2$·s), and more preferably 10 to 2,000 mJ/($cm^2$·s).

(Crosslinking Agent)

The crosslinking agent is not limited, and various crosslinking agents are selected corresponding to the prepolymer to be cross-linked and polymerized and corresponding to the monomer which may be further used.

The crosslinking agent may be copolymerized as a monomer unit constituting the prepolymer during the synthesis of the prepolymer. The crosslinking agent that may be copolymerized is not limited, and a conventionally known crosslinking agent can be appropriately selected and, for example, a polyfunctional (meth)acrylate or the like can be used.

In addition, the crosslinking agent that need not be copolymerized during the radical polymerization in the synthesis of the prepolymer is not limited, but examples thereof include a hydrazide-based crosslinking agent, an amine-based crosslinking agent, an isocyanate-based crosslinking agent, an epoxy-based crosslinking agent, an aziridine-based crosslinking agent, a melamine-based crosslinking agent, a metal chelate-based crosslinking agent, a metal salt-based crosslinking agent, a peroxide-based crosslinking agent, an oxazoline-based crosslinking agent, a urea-based crosslinking agent, an amino-based crosslinking agent, a carbodiimide-based crosslinking agent, and a coupling agent-based crosslinking agent (e.g., a silane coupling agent). These crosslinking agents may be used alone or in combination of two or more thereof.

Examples of the polyfunctional (meth)acrylate (that is, a monomer having two or more (meth)acryloyl groups in one molecule) include trimethylolpropane tri(meth)acrylate, pentaerythritol tetra(meth)acrylate, 1,2-ethylene glycol di(meth)acrylate, 1,6-hexanediol di(meth)acrylate, and dipentaerythritol hexaacrylate.

Examples of the hydrazide-based crosslinking agent include polyfunctional hydrazides such as isophthalic acid dihydrazide, terephthalic acid dihydrazide, phthalic acid dihydrazide, 2,6-naphthalenedicarboxylic acid dihydrazide, naphthalene acid dihydrazide, oxalic acid dihydrazide, malonic acid dihydrazide, succinic acid dihydrazide, glutamic acid dihydrazide, adipic acid dihydrazide, pimelic acid dihydrazide, suberic acid dihydrazide, azelaic acid dihydrazide, sebacic acid dihydrazide, brassic acid dihydrazide, dodecanedioic acid dihydrazide, acetonedicarboxylic acid dihydrazide, fumaric acid dihydrazide, maleic acid dihydrazide, itaconic acid dihydrazide, trimellitic acid dihydrazide, 1,3,5-benzenetricarboxylic acid dihydrazide, aconitic acid dihydrazide, and pyromellitic acid dihydrazide. Adipic acid dihydrazide is preferred.

Examples of the amine-based crosslinking agent include: aliphatic polyvalent amines such as hexamethylenediamine, 1,12-dodecanediamine, hexamethylenediamine carbamate, N,N-dicinnamylidene-1,6-hexanediamine, tetramethylenepentamine, and a hexamethylenediamine cinnamaldehyde adduct; aromatic polyvalent amines such as 4,4-methylenedianiline, m-phenylenediamine, 4,4-diaminodiphenyl ether, 3,4-diaminodiphenyl ether, 4,4-(m-phenylenediisopropyridene)dianiline, 4,4-(p-phenylenediisopropyriden)dianiline, 2,2-bis [4- (4-aminophenoxy) phenyl] propane, 4,4-diaminobenzanilide, 4,4-bis(4-aminophenoxy)biphenyl, m-xylylenediamine, p-xylylenediamine, and 1,3,5-benzenetriamine; and diamines having a polyether on the main chain, such as polyethylene glycol diamine, polypropylene glycol diamine, and diethylene glycol bis 3-aminopropyl ether. 1,12-dodecanediamine and diethylene glycol bis 3-aminopropyl ether are preferred.

Examples of the isocyanate-based crosslinking agent include: aliphatic polyisocyanates such as 1,6-hexamethylene diisocyanate, 1,4-tetramethylene diisocyanate, 2-methyl-1,5-pentane diisocyanate, 3-methyl-1,5-pentane diisocyanate, and lysine diisocyanate; alicyclic polyisocyanates such as isophorone diisocyanate, cyclohexyl diisocyanate, hydrogenated tolylene diisocyanate, hydrogenated xylene diisocyanate, hydrogenated diphenylmethane diisocyanate, and hydrogenated tetramethylxylene diisocyanate; aromatic polyisocyanates such as 2,4-tolylene diisocyanate, 2,6-tolylene diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropanediisocyanate, m-phenylenediocyanate, p-phenylenediocyanate, naftyrene-1,4-diisocyanate, naphthylene-1,5-diisocyanate, and 3,3'-dimethoxydiphenyl-4,4'-diisocyanate; and aromatic aliphatic polyisocyanates such as xylylene-1,4-diisocyanate and xylylene-1,3-diisocyanate.

Examples of the epoxy-based crosslinking agent include epoxy-based compounds having two or more or three or more epoxy groups in one molecule, such as 1,3-bis(N,N-diglycidylaminomethyl) cyclohexane, N,N,N',N'-tetraglycidyl-m-xylene diamine, diglycidyl aniline, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipate diglycidyl ester, o-phthalic acid diglycidyl ester, triglycidyl-tris(2-hydroxyethyl) isocyanurate, resorcin diglycidyl ether, bisphenol S diglycidyl ether, 1,3-bis(N,N-diglycidyl aminomethyl)benzene, 1,3-bis(N,N-diglycidylaminomethyl) toluene, 1,3,5-triglycidyl isocyanuric acid, N,N,N',N'-tetraglycidyl-m-xylylenediamine, glycerin triglycidyl ether, and trimethylolpropane glycidyl ether. For example, 1,3-bis(N,N-diglycidylaminomethyl) cyclohexane can be preferably used.

As the isocyanate-based crosslinking agent, dimers, trimers, reaction products, or polymers of the isocyanate-based compounds exemplified above (for example, a dimer or trimer of diphenylmethane diisocyanate, a reaction product of trimethylolpropane with tolylene diisocyanate, a reaction product of trimethylolpropane with hexamethylene diisocyanate, polymethylene polyphenyl isocyanate, polyether polyisocyanate, or polyester polyisocyanate), and the like may also be used. For example, a reaction product of trimethylolpropane with tolylene diisocyanate can be preferably used.

The amount of the crosslinking agent to be used can be preferably 0.02 to 8 parts by mass, and more preferably 0.08 to 5 parts by mass relative to 100 parts by mass in total of the prepolymer forming the polymer network structure and the monomer which may be further used.

In the polymer network structure forming step, the temperature at the time of forming the network with the prepolymer and the crosslinking agent is, for example, preferably 5°C to 100°C, and more preferably 15°C to 60°C.

The time required for forming the network by the prepolymer and the crosslinking agent is, for example, preferably shorter than 5 minutes, and more preferably shorter than 1 minute.

Moreover, at the time of forming the network by the prepolymer and the crosslinking agent, an alcohol such as ethanol, propanol, and butanol, water, or the like may be further used as a dispersion medium in addition to the ionic liquid.

In the production method of the present embodiment, the order of the inorganic network structure forming step and the polymer network structure forming step is not limited. The polymer network structure forming step may be performed after the inorganic network structure forming step, or the inorganic network structure forming step may be performed after the polymer network structure forming step. Further, the inorganic network structure forming step and the polymer network structure forming step may be allowed to proceed simultaneously.

For example, the production method of the present embodiment may further include a mixing step of mixing the ionic liquid, the inorganic compound, the prepolymer, and the crosslinking agent before the inorganic network structure forming step and the polymer network structure forming step. In this case, after the mixing step, the inorganic network structure forming step may be performed, and then the polymer network structure forming step may be performed. Further, after the mixing step, the polymer network structure forming step may be performed, and then the inorganic network structure forming step may be performed. Alternatively, after the mixing step, the inorganic network structure forming step and the polymer network structure forming step may also be allowed to proceed simultaneously.

The solid content concentration in the mixed liquid obtained by the mixing step is preferably 5% by mass or more, more preferably 10% by mass or more, and still more preferably 15% by mass or more from the viewpoint of coatability. In addition, it is preferably 50% by mass or less, more preferably 40% by mass or less, and still more preferably 30% by mass or less from the viewpoint of thinning a film.

In the production method of the present embodiment, the ionic liquid-containing structure may be produced by, after mixing an inorganic compound for forming an inorganic network structure and an ionic liquid to form the inorganic network structure through network formation of the inorganic compound, adding a prepolymer for forming a polymer network structure and a crosslinking agent and performing polymerization to form a polymer network structure. Alternatively, the ionic liquid-containing structure may also be produced by, after mixing a prepolymer for forming a polymer network structure, a crosslinking agent, and an ionic liquid to form a polymer network structure by a reaction between the prepolymer and the crosslinking agent, adding an inorganic compound for forming an inorganic network structure to form an inorganic network structure through network formation of the inorganic compound.

<Ionic Liquid-containing Structure>

The ionic liquid-containing structure can be formed by allowing the mixed liquid (gel precursor) obtained in the above mixing step to be coated onto, for example, a separator that has been subjected to releasing treatment, with a spin coater, an applicator, a wire bar or the like, followed by being subjected to the inorganic network structure forming step and the polymer network structure forming step.

Further, an ionic liquid-containing structure composite membrane can be prepared by allowing the ionic liquid-containing structure formed on the separator to be transferred to a support and then debonding the separator.

The ionic liquid-containing structure composite membrane can also be obtained by directly coating the mixed liquid onto the support, proceeding the inorganic network structure forming step and the polymer network structure forming step to form the ionic liquid-containing structure.

Examples of the support include an ultrafiltration membrane, a microfiltration membrane, and a nanofiltration membrane.

When an ionic liquid-containing structure is formed on the support, an intermediate layer having high gas permeability such as silicone rubber, silicone adhesive, polytrimethylsilylpropine (PTMSP), and PIM may be formed in advance on the surface of the support. The intermediate layer may be subjected to various easy-adhesion treatments such as a corona treatment and a plasma treatment, and then an ionic liquid-containing structure may be formed.

The ionic liquid-containing structure according to one embodiment of the present invention (hereinafter, also referred to as a structure of the present embodiment) contains an ionic liquid, an inorganic network structure, and a polymer network structure. The polymer network structure is composed of a plurality of polymer chains bonded by a

cross-linking chain. The polymer chain has a structure in which a monomer structural units are polymerized. The polymer chain and the cross-linking chain are bonded by a method different from a bond in which the monomer structural units are polymerized. Such an ionic liquid-containing structure has high long-term storability even in an atmospheric environment and has transparency, formability, self-supporting properties, flexibility, and toughness, while the structure is in a gel state.

One form of the ionic liquid-containing structure of the present embodiment is an ionic liquid-containing interpenetrating network structure in which an inorganic network structure and a polymer network structure are entangled with each other and an ionic liquid is contained between these network structures.

Here, the average of the mesh size of the inorganic network structure and the standard deviation of the mesh size of the inorganic network structure can be calculated from the cross-sectional TEM observation results of the ionic liquid-containing structure.

In the structure of the present embodiment, the polymer network structure is composed of a plurality of polymer chains bonded by a cross-linking chain, the polymer chain has a structure in which a monomer structural units are polymerized, and the polymer chain and the cross-linking chain are bonded by a method different from a bond in which the monomer structural units are polymerized.

The polymer chain preferably has a structure in which the monomer structural units are radically polymerized.

In addition, the polymer chain and the cross-linking chain are bonded to each other by at least one bond selected from the group consisting of a hydrazone bond, an amide bond, an imide bond, a urethane bond, an ether bond, and an ester bond. The bond between the polymer chain and the cross-linking chain is preferably an amide bond, and more preferably an amide bond.

The polymer network structure is preferably composed of a polymer having a polar group. Examples of the polar group contained in the polymer include the polar group possessed by the polar group-containing monomer described above or a functional group derived from the polar group.

The ionic liquid-containing structure of the present embodiment may contain an optional amino acid such as glycine, serine, alanine, proline, and dimethylglycine as an optional component.

From the viewpoint of high toughness, the ionic liquid-containing structure of the present embodiment preferably has a compressive strength of 0.5 $N/mm^2$ or more and 24 $N/mm^2$ or less, more preferably a compression strength of 10 $N/mm^2$ or more and 24 $N/mm^2$ or less, and more preferably a compression strength of 15 $N/mm^2$ or more and 24 $N/mm^2$ or less. Such compressive strength can be measured using, for example, a compression tester (Autograph; model number AGS-J, manufactured by Shimadzu Corporation).

The ionic liquid-containing structure of the present embodiment can hold the ionic liquid inside, for example, even under high pressure and can be applied to a $CO_2$ absorbing medium such as a $CO_2$ absorbing material or a $CO_2$-selective permeable membrane, which can be used even under high pressure. The ionic liquid-containing structure can also be bonded to an ultrafiltration membrane or the like to form an ionic liquid-containing structure composite membrane. The ionic liquid-containing structure of the present invention can be also applied to a conductive material, for example.

Examples

Hereinafter, the present invention will be specifically described with reference to Examples, but the present invention is not limited to these Examples.

(Polymerization of Prepolymer 1)

Ethyl acetate, DMAAm, DAAm, and AIBN were weighed according to the blending amounts shown in the table below, and stirred and mixed in an eggplant flask. After confirming that the solution was uniform, the solution was bubbled with nitrogen for 30 minutes. After nitrogen bubbling, the eggplant flask was sealed tightly, and the solution was stirred in an oil bath at 60°C for 4 hours to perform polymerization. The solution after polymerization was poured into an excess amount of hexane to precipitate and recover the polymer and thus a prepolymer 1 was obtained. The recovered prepolymer 1 was dried in a vacuum dryer at 30°C for 8 hours.

[Table 1]

Table 1 Reagents used

| Reagent name / notation and abbreviation | Manufacturer | Purity (%) |
|---|---|---|
| N,N-dimethylacrylamide / DMAAm | Tokyo Chemical Industry Co., Ltd. | 99.0 |
| Diacetoneacrylamide / DAAm | Tokyo Chemical Industry Co., Ltd. | 98.0 |

(continued)

| Table 1 Reagents used | | |
|---|---|---|
| Reagent name / notation and abbreviation | Manufacturer | Purity (%) |
| 2,2'-azobis(isobutyronitrile) / AIBN | Wako Pure Chemical Industries, Ltd | 98.0 |
| Ethyl acetate | Wako Pure Chemical Industries, Ltd | 99.5 |
| n-hexane | Wako Pure Chemical Industries, Ltd | 96.0 |

[Table 2]

| Table 2 Blending amount | |
|---|---|
| Reagent name | Used amount (g) |
| Ethyl acetate | 20.25 |
| DMAAm | 3.97 |
| DAAm | 3.38 |
| AIBN | 0.0296 |

(Polymerization of Prepolymer 2 (Poly(DMAAm-co-NSA)))

Tables 3 and 4 show the reagents used and the amounts of reagents used in the synthesis of poly(DMAAm-co-NSA). A synthesizer in which a reflux tube was attached to a three-necked flask was assembled. A total of 5 sets of nitrogen substitution were performed, with the operation of supplying nitrogen once every 2 minutes as one set while evacuating by connecting a vacuum pump and a $N_2$ cylinder to a three-way cock. After the nitrogen substitution, 1,4-dioxane was added into the three-necked flask using a glass syringe. Next, DMAAm, NSA, and AIBN were weighed in this order into a vial, and the mixture was stirred for several minutes and then added into the three-necked flask using a syringe. The solution in the three-necked flask was stirred with a stirrer for about 10 minutes, and the reflux tube was connected to a cooling device. Finally, the oil bath was set at 60°C and polymerization was performed under reflux for 24 hours.

[Table 3]

| Table 3 Reagents used | | |
|---|---|---|
| Reagent name / notation and abbreviation | Manufacturer | Purity (%) |
| N,N-dimethylacrylamide / DMAAm | Tokyo Chemical Industry Co., Ltd. | 99.0 |
| N-acryloyloxysuccinimide /NSA | Tokyo Chemical Industry Co., Ltd. | 98.0 |
| 2,2'-azobis(isobutyronitrile) / AIBN | Wako Pure Chemical Industries, Ltd | 98.0 |
| 1,4-dioxane (super-dehydrated) | Wako Pure Chemical Industries, Ltd | 99.5 |
| n-hexane / hexane | Wako Pure Chemical Industries, Ltd | 96.0 |
| Tetrahydrofuran (free of stabilizer) / THF | Wako Pure Chemical Industries, Ltd | 99.5 |

[Table 4]

| Table 4 Blending amount | | |
|---|---|---|
| Reagent name | Used amount (g) | Note |
| 1,4-dioxane | 80.0 | Super-dehydrated, containing 5 ppm of stabilizer |
| DMAAm | 14.6 | 1.9 [M] |
| NSA | 1.32 | 0.1 [M] |
| AIBN | $2.56 \times 10^{-1}$ | 0.02 [M] |

(Poly(DMAAm-co-NSA)) (Reprecipitation of Prepolymer (2))

Antifreeze water was put into the bath, and the temperature inside the bath was set to -10°C using a throw-in cooler. 800 ml of hexane was pre-cooled in the bath at -10°C for 2 hours.

The solution after the polymerization was transferred to an eggplant flask and decompressed at 60°C for 30 minutes or longer using an evaporator to remove 1,4-dioxane. THF (80 g) was added to the eggplant flask to dissolve the white solid. This solution was added dropwise to 800 ml of hexane cooled in the bath at -10°C using a dropper, and the mixture was stirred to precipitate poly(DMAAm-co-NSA). The precipitate was collected and evacuated for 24 hours in a thermostat bath at 30°C to obtain (a prepolymer 2).

(Polymerization of Prepolymer 3 (1.25 mol% Poly(DMAAm-co-NSA)))

In the same manner as in the polymerization of the prepolymer 2, poly(DMAAm-co-NSA) was synthesized to obtain a prepolymer 3, except that the used amount of NSA during polymerization was changed to 1.25 mol% with respect to DMAAm as shown in the table below.

[Table 5]

Table 5 Blending amount

| Reagent name | Used amount (g) | Note |
|---|---|---|
| 1,4-dioxane | 80.0 | Super-dehydrated, containing 5 ppm of stabilizer |
| DMAAm | 15.2 | 1.975 [M] |
| NSA | $3.28 \times 10^{-1}$ | 0.025 [M] |
| AIBN | $2.56 \times 10^{-1}$ | 0.02 [M] |

(Polymerization of Prepolymer 4 (2.5 mol% Poly(DMAAm-co-NSA)))

In the same manner as in the polymerization of the prepolymer 2, poly(DMAAm-co-NSA) was synthesized to obtain a prepolymer 4, except that the used amount of NSA during polymerization was changed to 2.5 mol% with respect to DMAAm.

(Polymerization of Prepolymer 5 (5.0 mol% Poly(DMAAm-co-NSA)))

In the same manner as in the polymerization of the prepolymer 2, poly(DMAAm-co-NSA) was synthesized to obtain a prepolymer 5, except that the used amount of NSA during polymerization was changed to 5.0 mol% with respect to DMAAm.

<Examples of Preparation of Composite Membrane by Transfer Method>

(Example 1)

0.075 g of TEOS as a silica source for forming an inorganic network structure, 0.12 g of a 0.01 mol/L HCl aqueous solution as an acid catalyst for condensation polymerization of TEOS, 0.225 g of the prepolymer 1 as a prepolymer for forming a polymer network structure, 0.017 g (5 mol%) of adipic acid dihydrazide as a crosslinking agent for the prepolymer 1, 1.2 g (80 wt%) of 1-ethyl-3-methylimidazolium disyanamide ([Emim] [DCA]) as an ionic liquid, and 2.25 g of a 70% isopropanol aqueous solution as a solvent were mixed and stirred at room temperature for 1 hour to obtain a gel precursor solution.

The obtained gel precursor solution was coated onto a release-treated PET film (SG2 manufactured by PANAC Co., Ltd.) having a thickness of 100 μm using a spin coater under the conditions of 2,000 rpm and 40 seconds, and the coating film was dried overnight in a dryer at 40°C to form an inorganic network structure and a polymer network structure, thereby obtaining an ionic liquid-containing structure.

A 4% hexane solution of a silicone adhesive (YR3340 manufactured by Momentive Performance Materials) was coated onto the obtained ionic liquid-containing structure using a spin coater under the conditions of 500 rpm and 40 seconds, dried at 90°C for 15 minutes, and then the obtained coating film was laminated with an ultrafiltration membrane (NTU-3175M manufactured by NITTO DENKO CORPORATION), thereby obtaining an ionic liquid-containing structure composite membrane according to Example 1.

(Example 2)

A composite membrane was obtained in the same manner as in Example 1 except that the amount of the ionic liquid was changed to 1.48 g (85 wt%).

(Example 3)

As a prepolymer for forming a polymer network structure, 1.16 g of the prepolymer 2 was dissolved in 5.12 g of ethanol to prepare a solution A.

1.28 g of ORGANOSILICASOL (manufactured by Nissan Chemical Corporation) as a silica source for forming an inorganic network structure and 6.4 g (80 wt%) of 1-ethyl-3-methylimidazolium disyanamide ([Emim] [DCA]) as an ionic liquid were dissolved in 2.944 g of ethanol to prepare a solution B.

As a crosslinking agent for the prepolymer 2, 0.0541 g (2.5 mol%) of 1,12-dodecanediamine (1,12-diaminododecane) was dissolved in 3.84 g of ethanol to prepare a solution C.

A gel precursor solution obtained by adding the solution B and the solution C to the solution A and mixing them while stirring the solution A was coated onto a release-treated PET film (SG2 manufactured by PANAC Co., Ltd.) having a thickness of 100 μm using a spin coater under the conditions of 2,000 rpm and 40 seconds, and the coating film was dried overnight in a dryer at 40°C to form an inorganic network structure and a polymer network structure. A 4% hexane solution of a silicone adhesive (YR3340 manufactured by Momentive Performance Materials) was coated onto the formed ionic liquid-containing structure using a spin coater under the conditions of 500 rpm and 40 seconds, dried at 90°C for 15 minutes, and then the obtained coating film was laminated with an ultrafiltration membrane (NTU-3175M manufactured by NITTO DENKO CORPORATION), thereby obtaining an ionic liquid-containing structure composite membrane according to Example 3.

(Example 4)

0.075 g of Aerosil 200 as a silica source for forming an inorganic network structure, 0.225 g of the prepolymer 1 as a prepolymer for forming a polymer network structure, 0.0085 g (2.5 mol%) of adipic acid dihydrazide as a crosslinking agent for the prepolymer 1, 1.2 g (80 wt%) of 1-ethyl-3-methylimidazolium tricyanomethanide ([Emim] [TCM]) as an ionic liquid, and 2.25 g of a 70% isopropanol aqueous solution as a solvent were mixed and stirred at room temperature for 1 hour to obtain a gel precursor solution.

An ionic liquid-containing structure and an ionic liquid-containing structure composite membrane according to Example 4 were obtained using the obtained gel precursor solution by the same method as in Example 1.

(Example 5)

As a prepolymer for forming a polymer network structure, 1.16 g of the prepolymer 2 was dissolved in 5.12 g of ethanol to prepare a solution A.

0.384 g of Aerosil 200 as a silica source for forming an inorganic network structure and 6.4 g (80 wt%) of 1-butyl-3-methylimidazolium bis(trifluoromethylsulfonyl)imide (

[Bmim] [$Tf_2N$]) as an ionic liquid were dissolved in 3.84 g of ethanol to prepare a solution B.

As a crosslinking agent for the prepolymer 2, 0.0541 g (2.5 mol%) of 1,12-dodecane diamine was dissolved in 3.84 g of ethanol to prepare a solution C.

While stirring the solution A, the solution B and the solution C were added to the solution A and they were mixed to obtain a gel precursor solution.

An ionic liquid-containing structure and an ionic liquid-containing structure composite membrane according to Example 5 were obtained using the obtained gel precursor solution by the same method as in Example 1.

(Example 6)

An ionic liquid-containing structure and an ionic liquid-containing structure composite membrane according to Example 6 were obtained in the same manner as in Example 1 except that the amount of the crosslinking agent (azipic acid dihydrazide) of the prepolymer 1 in Example 1 was changed to 0.0085 g (2.5 mol%).

(Example 7)

An ionic liquid-containing structure and an ionic liquid-containing structure composite membrane according to Example 7 were obtained in the same manner as in Example 1 except that the amount of the crosslinking agent (azipic

acid dihydrazide) of the prepolymer 1 in Example 1 was changed to 0.0034 g (1 mol%).

(Comparative Example 1)

0.15 g of AEROSIL (registered trademark) 130 (manufactured by Nippon Aerosil Co., Ltd., specific surface area: 130 $m^2/g$) as silica particles for forming an inorganic network structure, 0.43 g of N,N-dimethylacrylamide (DMAAm) as a monomer for forming a polymer network structure, 2.4 g of 1-ethyl-3-methylimidazolium disyanamide ([Emim] [DCA]) as an ionic liquid, 0.0135 g of N,N'-methylenebisacrylamide (MBAA) as a crosslinking agent (2 mol% based on DMAAm), 0.0061 g of Irgacure 907 (manufactured by BASF) as a polymerization initiator (0.5 mol% based on DMAAm), and 0.24 g of ethanol as a dispersion medium of the silica particles were mixed and stirred at room temperature for 1 hour to obtain a gel precursor solution.

The obtained gel precursor solution was cast on a polypropylene film having a thickness of 50 $\mu$m using an applicator to make a film having any thickness, and the coating film was covered with a release-treated PET film so that air did not enter. The film was irradiated with ultraviolet light of 365 nm (illuminance: 20 $mW/cm^2$) for 10 minutes to polymerize the monomer for forming a polymer network structure and, after the cover was peeled off, finally, vacuum drying was performed at 100°C for 8 hours to obtain an ionic liquid-containing structure according to Comparative Example 1. Incidentally, the network formation by the silica particles proceeded while each components were mixed and stirred, and an inorganic network structure was formed.

(Separation Performance)

Separation performance was measured and calculated for the ionic liquid-containing structure (hereinafter also referred to as membrane sample) of each of Examples 1 to 7 and Comparative Example 1 using a gas permeation measuring apparatus (manufactured by GL Sciences Inc.) by an equal pressure method or a differential pressure method. A mixed gas of $CO_2$ and He was charged through the supply side of the apparatus at atmospheric pressure or a total pressure of 0.4 MPa, and Ar gas at atmospheric pressure was circulated through the permeation side. A part of the helium gas on the permeation side was introduced into a gas chromatograph at constant time intervals, to determine the changes in the $CO_2$ concentration and the He concentration. The permeation rate of each of $CO_2$ and He was determined from the amount of increase in each of the concentration of $CO_2$ and the concentration of He with respect to the lapse of time. The results are shown in Table 6.

The setting conditions of the gas permeation measuring apparatus, the gas chromatography analysis conditions, and the method of calculating the gas permeation coefficient are as follows.

<Setting Conditions of Gas Permeation Measuring Apparatus>

Supplied gas amount: 200 cc/min
Supplied gas composition: $CO_2$/He (50/50) (volume ratio)
Sweeping gas at permeation side: Ar
Sweeping gas amount at permeation side: 10 cc/min
Permeation area: 8.3 $cm^2$
Measuring temperature: 30°C

<Gas Chromatography Analysis Conditions>

Ar carrier gas amount: about 10 cc/min
TCD temperature: 150°C
Oven temperature: 120°C
TCD current: 70 mA
TCD polarity: [-] LOW
TCD LOOP: 1 ml silicosteel tube 1/16" × 1.0 × 650 mm

<Performance Calculation Method>

The gas permeation amount N was calculated from the gas concentration in the flowing gas on the permeation side determined by gas chromatography and the permeance (permeation rate) Q was calculated based on the following equations 1 and 2. Moreover, the separation coefficient $\alpha$ was calculated based on the following equation 3.

[Eq 1]

$$Q_{CO2} = \frac{N_{CO2}}{A \times (P_f \times X_{CO2} - P_p \times Y_{CO2})} \quad \cdots\cdots \quad \text{Equation 1}$$

[Eq 2]

$$Q_{He} = \frac{N_{He}}{A \times (P_f \times X_{He} - P_p \times Y_{He})} \quad \cdots\cdots \quad \text{Equation 2}$$

[Eq 3]

$$\alpha = \frac{(Y_{CO2}/Y_{He})}{(X_{CO2}/X_{He})} \quad \cdots\cdots \quad \text{Equation 3}$$

Here, $N_{CO2}$ and $N_{He}$ represent the permeation amounts of $CO_2$ and He (unit: $cm^3$ (STP)), Pf and Pp represent total pressure of supplied gas and total pressure of permeated gas (unit: cmHg), A represents membrane area ($cm^2$), $X_{CO2}$ and $X_{He}$ represent the molar fractions of $CO_2$ and He in the supplied gas, respectively, and $Y_{CO2}$ and $Y_{He}$ represent molar fractions of $CO_2$ and He in the permeated gas, respectively.

(Membrane Thickness)

The membrane sample of each of Examples 1 to 7 and Comparative Example 1 that had been subjected to freezing fracture in liquid nitrogen was fixed on a sample table with a carbon tape with the fractured surface facing upward. Pt-Pd was deposited by sputtering, and a cross section was observed on a scanning electron microscope (SU-1500 manufactured by Hitachi High-Tech Corporation) to confirm the membrane thickness. The results are shown in Table 6.

[Table 6]

Table 6

| | Ionic liquid | Content (wt%) of ionic liquid | Inorganic compound | Type of polymer | Reactive functional group | Crosslinking agent | | Trigger of crosslinking | Separation performance | | Membrane thickness (μm) |
|---|---|---|---|---|---|---|---|---|---|---|---|
| | | | | | | | | | $CO_2$ permeation rate [GPU] | Separation coefficient α | |
| Comparative Example 1 | [Emim][DCA] | 80 | Aerosil 130 | DMAAm monomer start | No | MBAA | (2 mol%) | Photo | 6 | 26 | 90 |
| Example 1 | [Emim][DCA] | 80 | TEOS | Prepolymer 1 | Ketone group | Adipic acid dihydrazide | (5 mol%) | Thermal | 70 | 25 | 9 |
| Example 2 | [Emim][DCA] | 85 | TEOS | Prepolymer 1 | Ketone group | Adipic acid dihydrazide | (5 mol%) | Thermal | 100 | 17 | 9 |
| Example 3 | [Emim][DCA] | 80 | ORGANOSILICASOL | Prepolymer 2 | Succinimide group | 1,12-diaminododecane | (2.5 mol%) | Thermal | 100 | 21 | 5 |
| Example 4 | [Emim][TCM] | 80 | Aerosil 200 | Prepolymer 1 | Ketone group | Adipic acid dihydrazide | (2.5 mol%) | Thermal | 70 | 15.3 | 7 |
| Example 5 | [Emim][$Tf_2N$] | 80 | Aerosil 200 | Prepolymer 2 | Succinimide group | 1,12-diaminododecane | (2.5 mol%) | Thermal | 74 | 6.3 | 8 |
| Example 6 | [Emim][DCA] | 80 | TEOS | Prepolymer 1 | Ketone group | Adipic acid dihydrazide | (2.5 mol%) | Thermal | 70 | 25 | 7 |

(continued)

Table 6

| | Ionic liquid | Content (wt%) of ionic liquid | Inorganic compound | Type of polymer | Reactive functional group | Crosslinking agent | Trigger of crosslinking | Separation performance | | Membrane thickness (μm) |
|---|---|---|---|---|---|---|---|---|---|---|
| | | | | | | | | $CO_2$ permeation rate | Separation coefficient | |
| | | | | | | | | [GPU] | α | |
| Example 7 | [Emim] [DCA] | 80 | TEOS | Prepolymer 1 | Ketone group | Adipic acid dihydrazide (1 mol%) | Thermal | 70 | 25 | 7 |

(Mechanical Properties)

For each of Examples 1, 4, 6, and 7 and Comparative Example 1, an ionic liquid-containing structure (membrane sample) having a membrane thickness of 1 mm was prepared according to the above-mentioned production method and cut out into a JIS K6251 type 6 dumbbell shape. The obtained one was tested on an autograph (AGS-X, Shimadzu Corporation) at a tensile rate of 100 mm/min, and the maximum stress, maximum strain, and Young's modulus were calculated from the stress-strain curve. The results are shown in Table 7.

[Table 7]

Table 7

| Table 7 | | | | | | | |
|---|---|---|---|---|---|---|---|
| | Gel type | | | | | | |
| | Ionic liquid | Skeleton of polymer type | Inorganic compound | Crosslinking point (concentration of Crosslinking agent) | Fracture stress (kPa) | Fracture strain (-) | Young's modulus (kPa) |
| Comparative Example 1 | [Emim] [DCA] | DMAAm | Aerosil 130 (R) | N,N-methylenebisacrylamide | 11 | 0.46 | 22 |
| Example 7 | [Emim] [DCA] | DMAAm | TEOS | Diacetoneacrylamide (1 mol%) | 39.6 | 3.1 | 8.3 |
| Example 6 | [Emim] [DCA] | DMAAm | TEOS | Diacetoneacrylamide (2.5 mol%) | 40.6 | 1.3 | 27.9 |
| Example 1 | [Emim] [DCA] | DMAAm | TEOS | Diacetoneacrylamide (5 mol%) | 27.3 | 0.4 | 63.5 |
| Example 4 | [Emim] [TCM] | DMAAm | Aerosil 200 (R) | Diacetoneacrylamide (2.5 mol%) | 47.4 | 0.9 | 42.3 |

(Example 8)

As a prepolymer for forming a polymer network structure, 1.16 g of the prepolymer 2 was dissolved in 5.12 g of ethanol to prepare a solution A

0.384 g of Aerosil 200 as a silica source for forming an inorganic network structure and 6.4 g of 1-butyl-3-methylimidazolium bis(trifluoromethylsulfonyl)imide ([Bmim] [$Tf_2N$]) as an ionic liquid were dissolved in 3.84 g of ethanol to prepare a solution B.

As a crosslinking agent for the prepolymer 2, 0.0541 g of 1,12-dodecane diamine was dissolved in 3.84 g of ethanol to prepare a solution C.

After mixing the solution B and the solution C, the mixed solution was added dropwise to the solution A while the solution A was being stirred at 150 rpm, and the mixture was stirred for 40 seconds to prepare a gel precursor solution.

Two glass plates with a hydrophobic film (FEP adhesive sheet film NR5008-002 manufactured by Flon Chemical) attached were prepared, and the obtained gel precursor solution was poured in a container in which a die-cut PTFE mold (width: 8 cm, length: 8 cm, thickness: 5 mm) was placed on one glass plate. Thereafter, another glass plate was placed on the poured gel precursor solution and allowed to stand at room temperature for 1 day to form an ionic liquid-containing structure.

The structure was taken out of the container and allowed to stand in a thermostat bath at 60°C for 22 hours. Finally, vacuuming was performed at 100°C for 2 hours to obtain an ionic liquid-containing structure according to Example 8. The ionic liquid-containing structure according to Example 8 was subjected to a tensile test using an autograph at room temperature and at 100 mm/min.

(Examples 9 to 12)

Ionic liquid-containing structures according to Examples 9 to 12 were obtained in the same manner as in Example 8 except that the blending amount of ethanol and [Bmim] [$Tf_2N$] was changed such that ethanol/[Bmim] [$Tf_2N$] [g/g] = 2.5, 3, 3.5, 4 respectively. In addition, the tensile test was performed as in Example 8.

(Example 13)

The gel precursor solution was poured in the prepared container in the same manner as in Example 8. Thereafter, a glass plate was not placed on the poured gel precursor solution and the poured gel precursor solution was allowed to stand at room temperature for 1 day to form an ionic liquid-containing structure.

The obtained structure was treated in the same manner as in Example 8 to obtain an ionic liquid-containing structure according to Example 13 and then subjected to a tensile test as in Example 8.

Tables 8 to 10 show the reagents, equipment, and reagent amounts used in Examples 8 to 13.

[Table 8]

Table 8 Reagents used

| Reagent name / notation and abbreviation | Manufacturer | Purity (%) |
|---|---|---|
| Prepolymer 2 (poly(DMAAm-co-NSA) | - | - |
| Ethanol | Wako Pure Chemical Industries, Ltd | 99.5 |
| 1,12-dodecanediamine | Wako Pure Chemical Industries, Ltd | 99.7 |
| 1-butyl-3-methylimidazolium bis(trifluoromethylsulfonyl)imide / [Bmim] [$Tf_2N$] | Sigma-Aldrich | 98.0 |
| Aerosil 200 | NIPPON AEROSIL CO., LTD. | - |

[Table 9]

Table 9 Equipment used

| Equipment name/ notation and abbreviation | Model Number | Manufacturer |
|---|---|---|
| Constant temperature dryer / thermostat bath | FS-405 | ADVANTEC |

(continued)

| Table 9 Equipment used | | |
|---|---|---|
| Equipment name/ notation and abbreviation | Model Number | Manufacturer |
| Vacuum pump | DAU-20 | ULVAC |
| Desktop universal tester / Autograph | EZ-LX | SHIMADZU |

[Table 10]

| Table 10 Reagent amount | | |
|---|---|---|
| Reagent name | Used amount (g) | (wt%) after ethanol removal and note |
| Prepolymer 2 | 1.16 | 14.5 |
| Dodecane diamine | $5.41 \times 10^{-2}$ | 0.7 |
| Aerosil 200 | $3.84 \times 10^{-1}$ | 4.8 |
| Ethanol (Examples 8, 13) | 12.8 (5.12+3.84+3.84) | EtOH/[Bmim] [$Tf_2N$] [g/g] = 2 |
| (Example 9) | 16.0 (8.42+3.84+3.84) | EtOH/[Bmim] [$Tf_2N$] [g/g] = 2.5 |
| (Example 10) | 19.2 (11.52+3.84+3.84) | EtOH/[Bmim] [$Tf_2N$] [g/g] = 3 |
| (Example 11) | 22.4 (14.72+3.84+3.84) | EtOH/[Bmim] [$Tf_2N$] [g/g] = 3.5 |
| (Example 12) | 25.6 (17.92+3.84+3.84) | EtOH/[Bmim] [$Tf_2N$] [g/g] = 4 |
| [Bmim] [$Tf_2N$] | 6.40 | 80.0 |
| Used amount of ethanol: total amount (solution A + solution B + solution C) | | |

The ionic liquid-containing structures obtained in Examples 8 to 13 were tested at a tensile rate of 100 mm/min using an autograph (EZ-LX, Shimadzu Corporation). FIG. 1 shows the stress-strain curve, FIG. 2 shows the fracture stress (kPa), FIG. 3 shows the fracture strain (-), and FIG. 4 shows the Young's modulus.

Incidentally, in FIGs. 1 to 4, the results of Examples 8 to 12 were described as "2.0 closed", "2.5 closed", "3.0 closed", "3.5 closed", and "4.0 closed", respectively, and the result of Example 13 was described as "2.0 open".

From the results shown in FIGs. 1 to 4, it is confirmed that the strain tends to increase as the amount of the diluent increases. In addition, it is confirmed that the Young's modulus tends to decrease as the amount of diluent increases. It is considered that this is because the effective crosslinking density of the polymer decreases in the state where the diluent is contained in a larger amount. It is considered that in the ionic liquid-containing structures of Examples 4, 5, 8 to 13 and Examples 14 to 16 described later, the inorganic network structure fractures (energy dissipation) due to the elongation of the polymer network structure to some extent. It is considered that the elastic modulus tends to decrease under the condition where the amount of the diluent is large, due to the decrease in the effective crosslink density of the polymer.

(Example 14)

An ionic liquid-containing structure and an ionic liquid-containing structure composite membrane according to Example 14 were obtained in the same manner as in Example 8 except that the prepolymer in Example 8 was changed to 1.20 g of the prepolymer 3 (1.25 mol% poly(DMAAm-co-NSA)). In addition, the ionic liquid-containing structure was subjected to a tensile test as in Example 8.

Table 11 shows the reagents and the amounts of reagents used in Example 14.

[Table 11]

| Table 11 | | |
|---|---|---|
| Reagent name | Used amount (g) | (wt%) after ethanol removal and note |
| Prepolymer 3 | 1.20 | 15.0 |
| Dodecane diamine | $1.56 \times 10^{-2}$ | 0.2 |
| Aerosil 200 | $3.84 \times 10^{-1}$ | 4.8 |
| Ethanol | 12.8 (5.12+3.84+3.84) | EtOH/[Bmim] [$Tf_2N$] [g/g] = 2 |

(continued)

| Table 11 | | |
|---|---|---|
| Reagent name | Used amount (g) | (wt%) after ethanol removal and note |
| [Bmim] [$Tf_2N$] | 6.40 | 80.0 |
| Used amount of ethanol: total amount (solution A + solution B + solution C) | | |

(Example 15)

An ionic liquid-containing structure and an ionic liquid-containing structure composite membrane according to Example 15 were obtained in the same manner as in Example 8 except that the prepolymer in Example 8 was changed to 1.20 g of the prepolymer 4 (2.5 mol% poly(DMAAm-co-NSA)). In addition, the ionic liquid-containing structure was subjected to a tensile test as in Example 8.

(Example 16)

An ionic liquid-containing structure and an ionic liquid-containing structure composite membrane according to Example 16 were obtained in the same manner as in Example 8 except that the prepolymer in Example 8 was changed to 1.20 g of the prepolymer 5 (5.0 mol% poly(DMAAm-co-NSA)). In addition, the ionic liquid-containing structure was subjected to a tensile test as in Example 8.

The ionic liquid-containing structures obtained in Examples 14 to 16 were tested at a tensile rate of 100 mm/min using an autograph (EZ-LX, Shimadzu Corporation). FIG. 5 shows the stress-strain curve. FIG. 6 shows the fracture stress (kPa), FIG. 7 shows the fracture strain (-), FIG. 8 shows the Young's modulus (kPa), and FIG. 9 shows the toughness (kJ/$m^3$) indicating the area to the fracture point, all these parameters being calculated from FIG. 5.

In FIGs. 5 to 9, the results of Examples 14 to 16 were described as "NSA/DMAAm = 1.25 mol%", "NSA/DMAAm = 2.5 mol%", and "NSA/DMAAm = 5.0 mol%", respectively.

From FIGs. 5 to 9, it is confirmed that the fracture strain and the toughness of the ionic liquid-containing structure are increased by reducing the crosslinking points of the poly(DMAAm-co-NSA).

<Examples of Preparation of Composite Membrane by Direct Coating Method>

(Example 17)

10 g of a silicone solution (YSR3022 manufactured by Momentive Performance Materials) was diluted with 140 g of normal decane (manufactured by Sankyo Chemical Co., Ltd.) to prepare a 2% by mass of silicone solution. A step of immersing an ultrafiltration membrane (NTU-3175M manufactured by NITTO DENKO CORPORATION) in the prepared silicone solution for 5 seconds, performing draining for 40 seconds, and performing drying in a dryer at 120°C for 2 minutes was performed twice to form a silicone layer having a thickness of 2 μm on the filtration membrane. The surface of the formed silicone layer was hydrophilized at a strength of 1 J/$cm^2$ using a table-type corona treatment device (manufactured by KASUGA DENKI, INC.).

As a prepolymer for forming a polymer network structure, 1.16 g of the prepolymer 2 was dissolved in 5.12 g of ethanol to prepare a solution A.

1.28 g of Methanol Silica sol (manufactured by Nissan Chemical Corporation) as a silica source for forming an inorganic network structure and 6.4 g (80 wt%) of 1-ethyl-3-methylimidazolium disyanamide ([Emim] [DCA]) as an ionic liquid were dissolved in 2.944 g of ethanol to prepare a solution B.

As a crosslinking agent for the prepolymer 2, 0.0541 g (2.5 mol%) of 1,12-dodecane diamine was dissolved in 3.84 g of ethanol to prepare a solution C.

A gel precursor solution (spin coat solution) obtained by adding the solution B and the solution C to the solution A and mixing them while stirring the solution A was coated onto a silicone layer-formed ultrafiltration membrane after a corona treatment using a spin coater under the conditions of 2,000 rpm and 40 seconds, and the coating film was dried overnight in a dryer at 40°C to form an inorganic network structure and a polymer network structure, thereby obtaining an ionic liquid-containing structure and an ionic liquid-containing structure composite membrane according to Example 17.

(Example 18)

An ionic liquid-containing structure and an ionic liquid-containing structure composite membrane according to

Example 18 were obtained in the same manner as in Example 17 except that the used amount of ethanol in the solution A in Example 17 was changed to 11.52 g.

(Example 19)

An ionic liquid-containing structure and an ionic liquid-containing structure composite membrane according to Example 19 were obtained in the same manner as in Example 17 except that the used amount of ethanol in the solution A in Example 17 was changed to 14.72 g.

(Example 20)

An ionic liquid-containing structure and an ionic liquid-containing structure composite membrane according to Example 20 were obtained in the same manner as in Example 17 except that the used amount of ethanol in the solution A in Example 17 was changed to 17.92 g.

With respect to Examples 17 to 20, the membrane thickness was measured and the separation performance was evaluated in the same manner as in Examples 1 to 7. The results are shown in Table 12.

[Table 12]

Table 12

| | Ionic liquid | Content (wt%) of ionic liquid | Inorganic compound | Type of polymer | Reactive functional group | Crosslinking agent | Trigger of crosslinking | Solid content concentration [wt%] of spin coat solution | Separation performance | | Membrane thickness (μm) |
|---|---|---|---|---|---|---|---|---|---|---|---|
| | | | | | | | | | Permeation rate | Separation coefficient | |
| | | | | | | | | | [GPU] | A ($CO_2$/He) | |
| Example 17 | [Emim] [DCA] | 80 | Methanol Silica sol | Prepolymer 2 | Succinimide group | 1,12-diaminododecane (2.5 mol%) | Thermal | 38 | 111 | 18 | 5 |
| Example 18 | | | | | | | | 29 | 168 | 18.3 | 3.5 |
| Example 19 | | | | | | | | 26 | 201 | 15.8 | 2.46 |
| Example 20 | | | | | | | | 23 | 247 | 15.5 | 2 |

Although the preferred embodiments of the present invention have been described above, the present invention is not limited to the above-described embodiment, and various modifications and substitutions can be added to the above-described embodiment without departing from the scope of the present invention.

This application is based on a Japanese patent application (Japanese Patent Application No. 2018-160832) filed on August 29, 2018, contents of which are incorporated herein by reference.

## Claims

1. A method for producing an ionic liquid-containing structure, comprising:

   an inorganic network structure forming step of forming a network structure of an inorganic compound in the presence of an ionic liquid; and
   a polymer network structure forming step of forming a polymer network structure of a prepolymer and a crosslinking agent in the presence of the ionic liquid.

2. The production method according to claim 1, wherein the inorganic compound includes inorganic particles.

3. The production method according to claim 2, wherein the inorganic particles include inorganic oxide particles.

4. The production method according to claim 3, wherein the inorganic oxide particles include silica particles.

5. The production method according to any one of claims 2 to 4, wherein the inorganic particles have a specific surface area of 20 to 300 $m^2/g$.

6. The production method according to claim 1, wherein the inorganic compound includes a silicon-containing compound.

7. The production method according to claim 6, wherein the silicon-containing compound includes a silicate.

8. The production method according to any one of claims 1 to 7, wherein the prepolymer contains, as a monomer unit, a polar group-containing monomer.

9. The production method according to claim 8, wherein a polar group of the polar group-containing monomer is an atomic group containing an N atom or an O atom.

10. The production method according to any one of claims 1 to 9, wherein an amount of the ionic liquid to be used is 5% to 95% by mass based on 100% by mass of components constituting the ionic liquid-containing structure.

11. The production method according to any one of claims 1 to 10, further comprising:

    a mixing step of mixing the ionic liquid, the inorganic compound, the prepolymer, and the crosslinking agent before the inorganic network structure forming step and the polymer network structure forming step.

12. An ionic liquid-containing structure comprising:

    an ionic liquid;
    an inorganic network structure; and
    a polymer network structure, wherein
    the polymer network structure is composed of a plurality of polymer chains bonded by a cross-linking chain,
    the polymer chain has a structure in which monomer structural units are polymerized, and
    the polymer chain and the cross-linking chain are bonded in a different manner from a bond in which the monomer structural units are polymerized.

13. The ionic liquid-containing structure according to claim 12, wherein the polymer chain has a structure in which the monomer structural units are radically polymerized.

14. The ionic liquid-containing structure according to claim 12 or 13, wherein the polymer chain and the cross-linking

chain are bonded to each other by at least one bond selected from the group consisting of a hydrazone bond, an amide bond, an imide bond, a urethane bond, an ether bond, and an ester bond.

**FIG. 1**

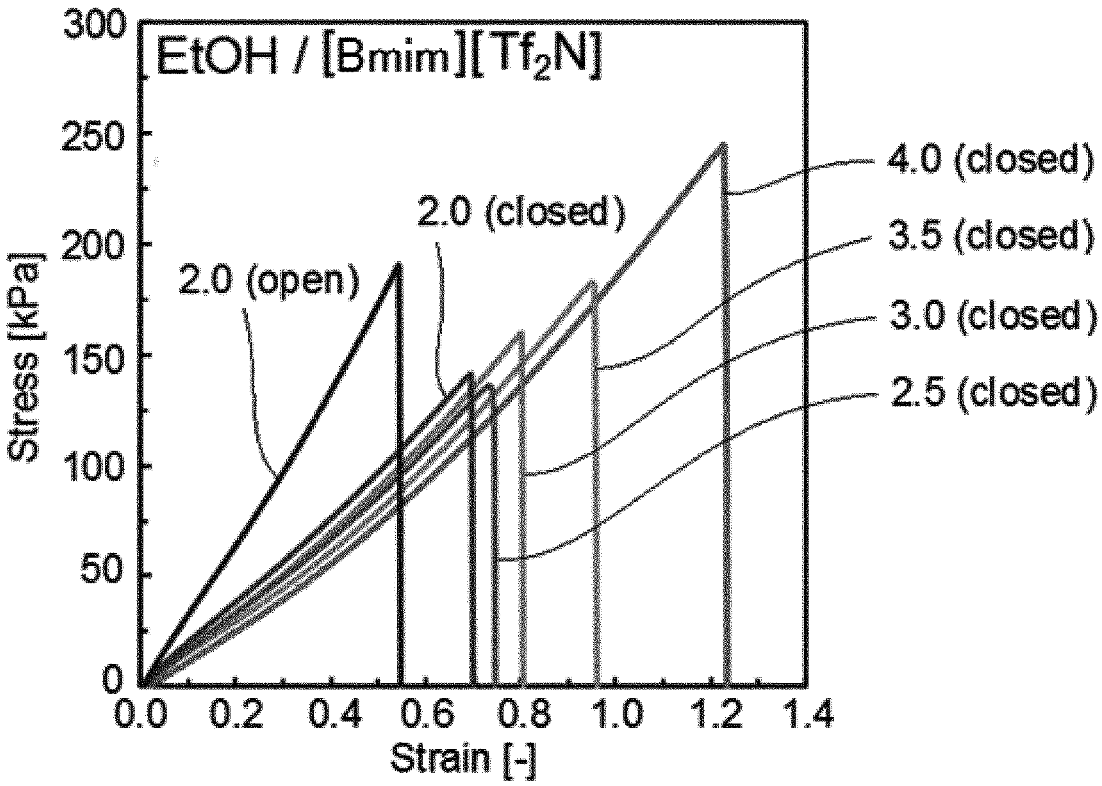
EtOH / [Bmim][Tf2N]
Stress [kPa]
Strain [-]
2.0 (open)
2.0 (closed)
4.0 (closed)
3.5 (closed)
3.0 (closed)
2.5 (closed)
0
50
100
150
200
250
300
0.0
0.2
0.4
0.6
0.8
1.0
1.2
1.4

FIG. 2

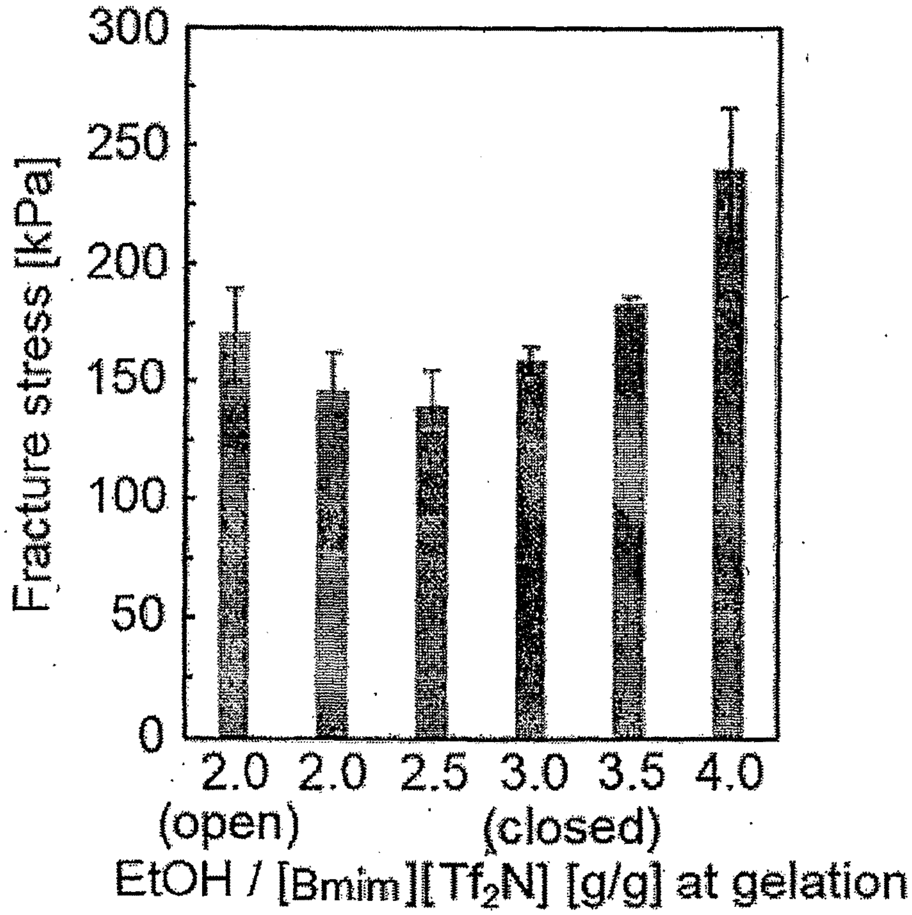
300
250
200
150
100
50
0
Fracture stress [kPa]
2.0 (open)
2.0
2.5
3.0 (closed)
3.5
4.0
EtOH / [Bmim][Tf2N] [g/g] at gelation

# FIG. 3

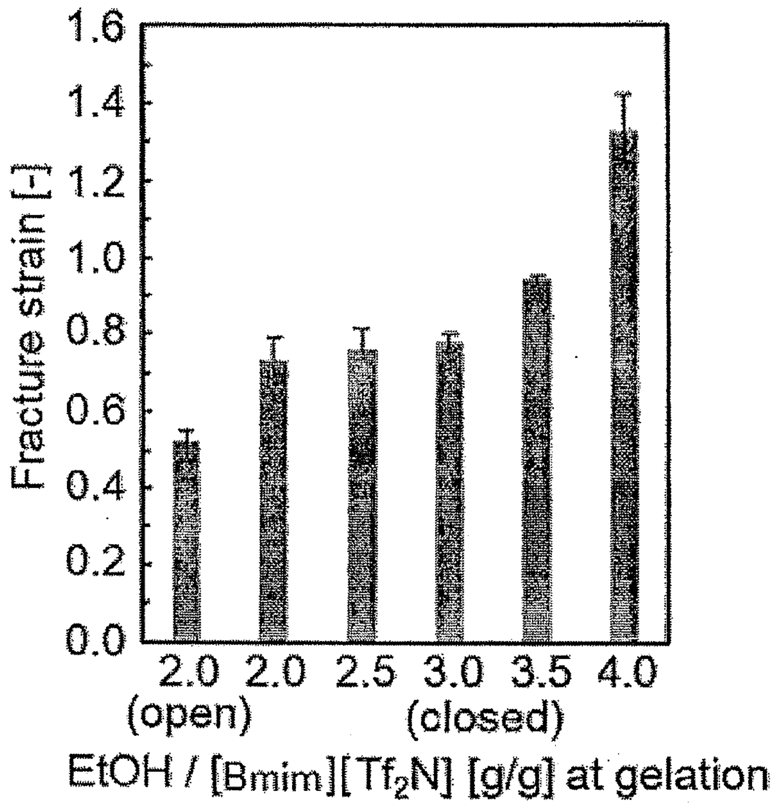
1.6
1.4
1.2
1.0
0.8
0.6
0.4
0.2
0.0
Fracture strain [-]
2.0 (open)
2.0
2.5
3.0 (closed)
3.5
4.0
EtOH / [Bmim][Tf2N] [g/g] at gelation

# FIG. 4

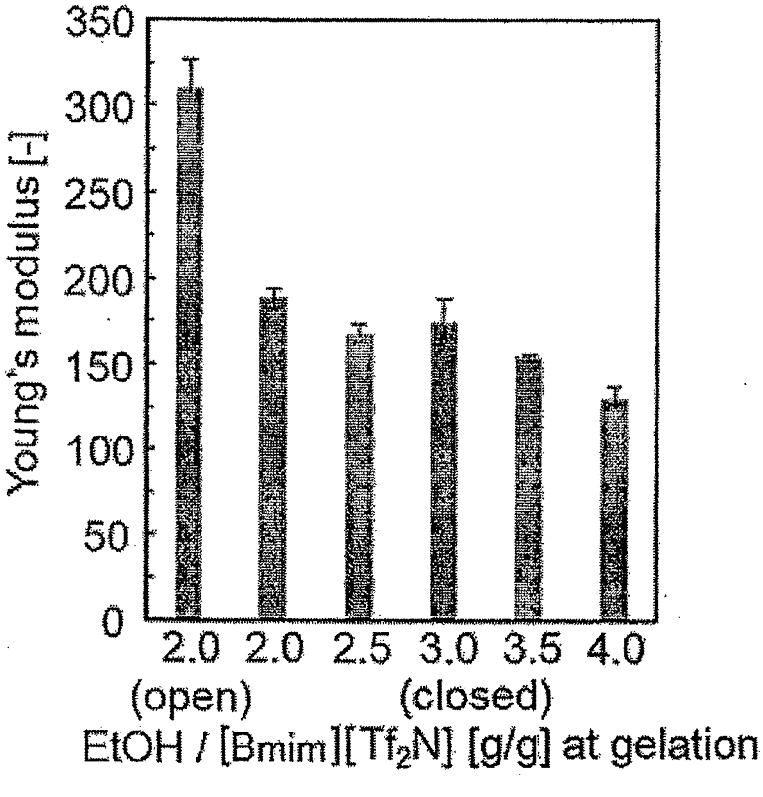
Young's modulus [-]
350
300
250
200
150
100
50
0
2.0 (open)
2.0
2.5
3.0 (closed)
3.5
4.0
EtOH / [Bmim][Tf2N] [g/g] at gelation

FIG. 5

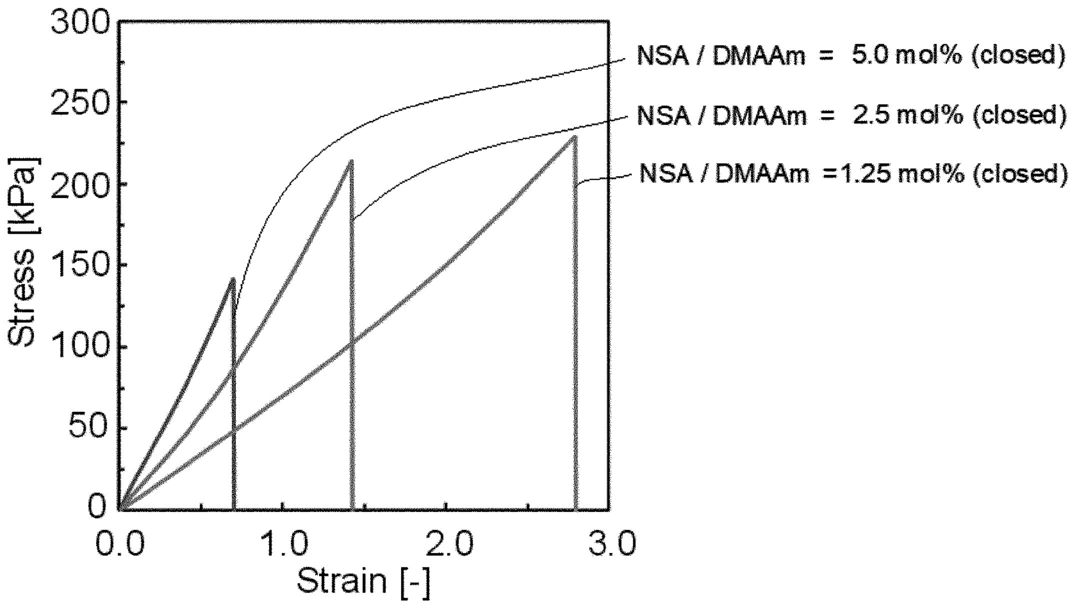
NSA / DMAAm = 5.0 mol% (closed)
NSA / DMAAm = 2.5 mol% (closed)
NSA / DMAAm =1.25 mol% (closed)
Stress [kPa]
300
250
200
150
100
50
0
0.0
1.0
2.0
3.0
Strain [-]

# FIG. 6

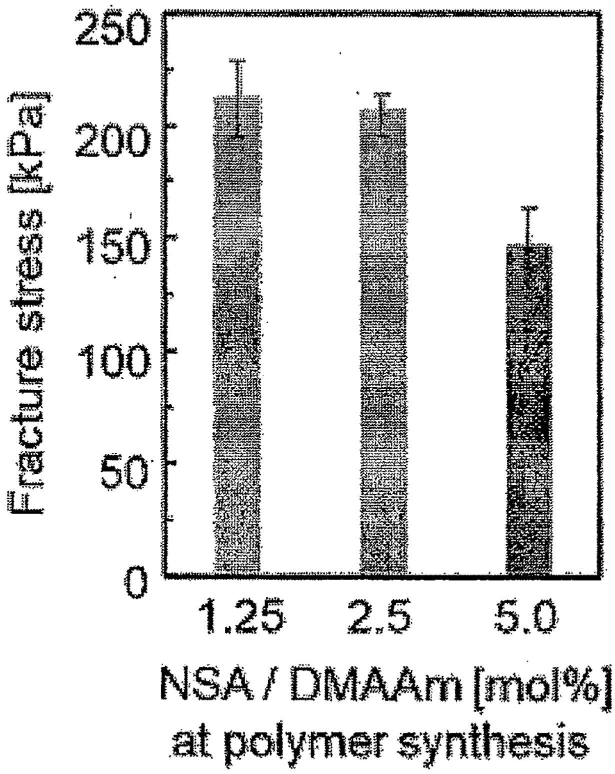
Fracture stress [kPa]
250
200
150
100
50
0
1.25
2.5
5.0
NSA / DMAAm [mol%]
at polymer synthesis

# FIG. 7

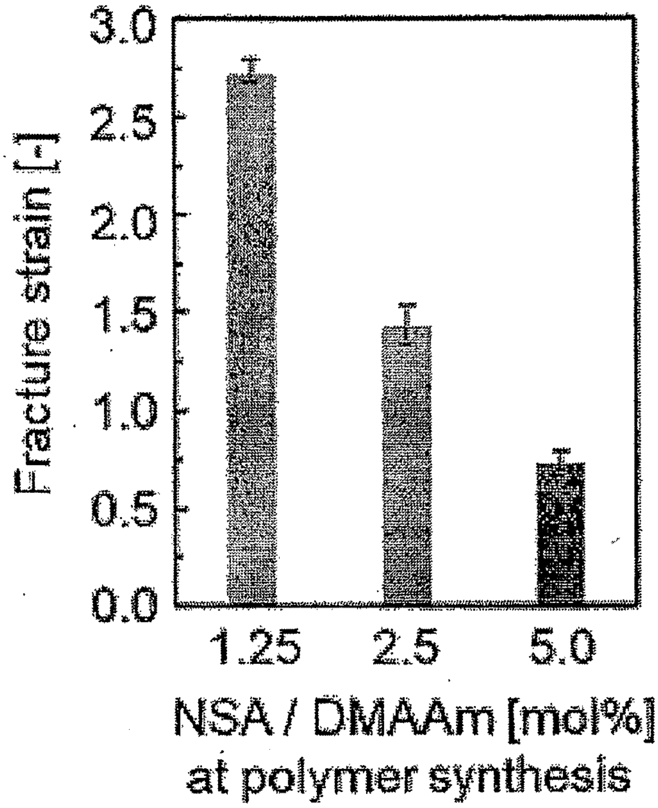
3.0
2.5
2.0
1.5
1.0
0.5
0.0
Fracture strain [-]
1.25
2.5
5.0
NSA / DMAAm [mol%]
at polymer synthesis

FIG. 8

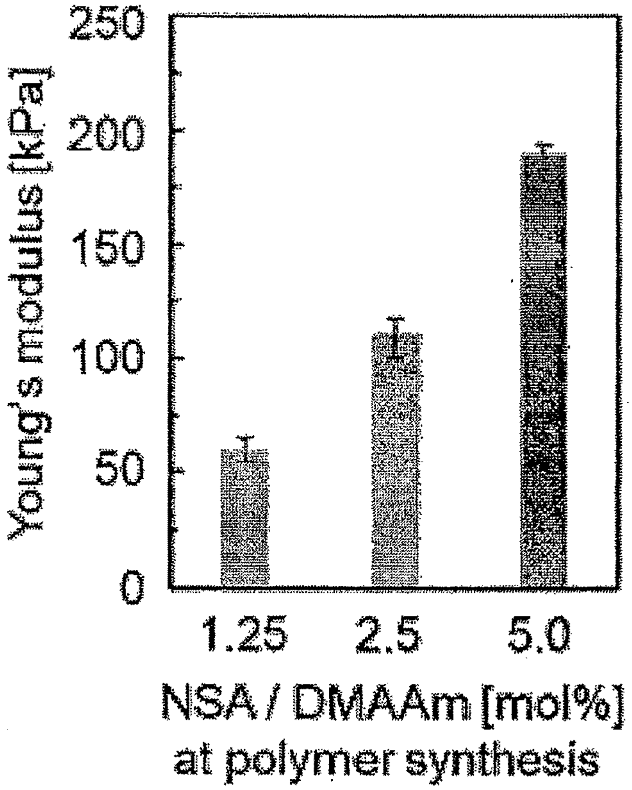
Young's modulus [kPa]
250
200
150
100
50
0
1.25
2.5
5.0
NSA / DMAAm [mol%]
at polymer synthesis

FIG. 9

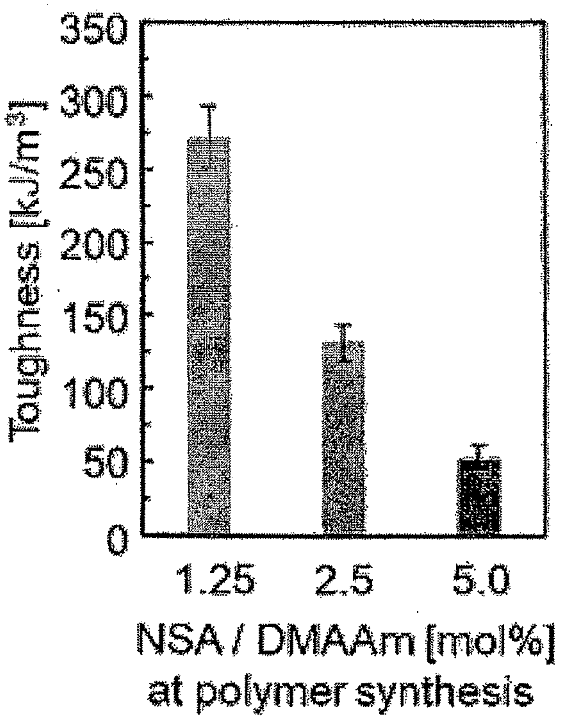

Toughness [kJ/m³]
350
300
250
200
150
100
50
0
1.25
2.5
5.0
NSA / DMAAm [mol%]
at polymer synthesis

**INTERNATIONAL SEARCH REPORT**

International application No.
PCT/JP2019/034024

A. CLASSIFICATION OF SUBJECT MATTER
Int.Cl. C08L101/02(2006.01)i, C08J3/24(2006.01)i, C08K3/36(2006.01)i, C08L83/02(2006.01)i

According to International Patent Classification (IPC) or to both national classification and IPC

B. FIELDS SEARCHED

Minimum documentation searched (classification system followed by classification symbols)
Int.Cl. C08L1/00-101/16, C08J3/00-3/28, C08K3/00-13/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2015-25056 A (KOBE UNIVERSITY) 05 February 2015, claims, paragraphs [0031]-[0041], example 3 (Family: none) | 1, 6-10, 12-14<br>2-5, 11 |
| X<br>A | JP 2014-214210 A (SHIN-ETSU CHEMICAL CO., LTD.) 17 November 2014, claims, paragraphs [0032]-[0038], [0043], example 2 & CN 104119664 A | 1-5, 10-12<br>6-9, 13-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 November 2019 (08.11.2019) | 19 November 2019 (19.11.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/034024

C (Continuation). DOCUMENTS CONSIDERED TO BE RELEVANT

| Category* | Citation of document, with indication, where appropriate, of the relevant passages | Relevant to claim No. |
|---|---|---|
| A | JP 2017-105987 A (HUTCHINSON) 15 June 2017, claims, examples & US 2017/0133714 A1, claims, examples & EP 3165559 A1 & CN 106935776 A | 1-14 |
| A | JP 2016-164221 A (NATIONAL INSTITUTE OF ADVANCED INDUSTRIAL SCIENCE AND TECHNOLOGY) 08 September 2016, claims, examples (Family: none) | 1-14 |
| A | JP 2012-117010 A (KANTO CHEMICAL CO., INC.) 21 June 2012, claims, examples & WO 2012/074089 A1 & CN 103261330 A | 1-14 |
| PA | WO 2019/103058 A1 (NITTO DENKO CORP.) 31 May 2019, claims, examples & JP 2019-94493 A | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012511612 A
- JP 2008024818 A
- JP 6103708 B
- JP 2018160832 A


### Non-patent literature cited in the description


- *Reference Literature: Chem. Mater.,* 2007, vol. 19, 5848-5850